(19)

Europäisches Patentamt
European Patent Office
Office européen des brevets

(11) **EP 2 958 170 A1**

(12) **EUROPEAN PATENT APPLICATION**
published in accordance with Art. 153(4) EPC

(43) Date of publication:
**23.12.2015 Bulletin 2015/52**

(51) Int Cl.:
**H01M 2/16** *(2006.01)*    **B32B 5/32** *(2006.01)*
**B32B 27/30** *(2006.01)*    **B32B 27/32** *(2006.01)*

(21) Application number: **14751713.0**

(22) Date of filing: **12.02.2014**

(86) International application number:
**PCT/JP2014/053125**

(87) International publication number:
**WO 2014/126079 (21.08.2014 Gazette 2014/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.02.2013 JP 2013025478**

(71) Applicant: **Toray Battery Separator Film Co., Ltd. Tochigi 329-2763 (JP)**

(72) Inventors:
• **MIZUNO, Naoki**
  **Nasushiobara-shi**
  **Tochigi 329-2763 (JP)**
• **SHIMIZU, Ken**
  **Nasushiobara-shi**
  **Tochigi 329-2763 (JP)**

(74) Representative: **Webster, Jeremy Mark**
  **Mewburn Ellis LLP**
  **City Tower**
  **40 Basinghall Street**
  **London EC2V 5DE (GB)**

(54) **SEPARATOR FOR BATTERIES AND METHOD FOR PRODUCING SEPARATOR FOR BATTERIES**

(57)    A battery separator comprising a microporous polyolefin membrane having a thickness of 16 μm or less, and a modifying porous layer comprising a fluorine resin and an inorganic particle or cross-linked polymer particle, the modifying porous layer being laminated on one side of the microporous polyolefin membrane, wherein the microporous polyolefin membrane has (a) a shutdown temperature of 135°C or lower, and (b) a rate of air resistance change of $1 \times 10^4$ sec/100 cc/°C or more, and Expression 1 and Expression 2 are satisfied, and a process for producing the battery separator.

$$0.01 \leq absT(1200) \leq 0.30 \quad \text{Expression 1}$$

absT(1200): Absorbance of an absorption having a peak at or near 1,200 $cm^{-1}$ per 10 μm thickness of a microporous polyolefin membrane, as measured by infrared spectroscopy (transmission method) after peeling a modifying porous layer off the microporous polyolefin membrane

$$0.001 \leq absR(1200) \leq 0.030 \quad \text{Expression 2}$$

absR(1200): Absorbance of a maximum peak at or near 1,200 $cm^{-1}$, as measured by infrared spectroscopy (reflection method) on the surface of a microporous polyolefin membrane that is opposite to a modifying porous layer

Provided are a battery separator suitable for high-capacity batteries, which has adhesion to electrodes and is excellent in shutdown properties and electrolyte permeability, and a process for producing the battery separator.

[Figure 1]

**Description**

Technical Field

The present invention relates to a battery separator suitable for high-capacity batteries, which has adhesion to electrodes and is excellent in shutdown properties, and a process for producing the battery separator.

Background Art

Battery separators are required to have various properties. In particular, lithium ion battery separators are required to have not only excellent mechanical properties and permeability, but also properties such as blocking pores upon heat generation in batteries to stop battery reaction (shutdown properties) and preventing a membrane from breaking at temperatures exceeding a shutdown temperature (meltdown properties). Furthermore, the separators are required to have improved adhesion to electrode material to improve battery cycle characteristics, and improved electrolyte permeability to improve productivity. For these reasons, studies have hitherto been conducted to laminate various modifying porous layers to a battery separator. As the modifying porous layer, for example, polyamide-imide resins, polyimide resins, and polyamide resins, all of which have both heat resistance and electrolyte permeability, and fluorine resins, which have excellent electrode adhesion, are being suitably used. "Modifying porous layer" as used herein refers to a layer containing a resin that provides or improves at least one function such as heat resistance, adhesion to electrode material, or electrolyte permeability.

Furthermore, to increase battery capacity, it is expected that membranes will become thinner and thinner in order to increase the area of a separator that can be loaded into a container. If membranes become thinner, however, they tend to be deformed in the planar direction, and accordingly, particularly in battery separators obtained by laminating a modifying porous layer, the modifying porous layer may be peeled off during processing, a slitting process, or a battery assembly process, which makes it more difficult to ensure safety.

Furthermore, to achieve cost reduction, it is expected that the speed will be faster in a battery assembly process, and accordingly, the battery separators obtained by laminating a modifying porous layer require even higher adhesion to the modifying porous layer to withstand high-speed processing, by which troubles such as peeling-off of the modifying porous layer hardly occur.

Prior Art Documents

Patent Documents

To satisfy these requirements, various studies have hitherto been conducted. In Example 6 in Patent Document 1, for example, a multilayer porous membrane is obtained in such a manner that a porous polyethylene membrane having a thickness of 16 $\mu$m is coated on both sides with a resin solution comprising 10 parts by weight of polyvinylidene fluoride (PVDF), 10 parts by weight of polyethylene glycol, and 80 parts by weight of dimethylacetamide, immersed in a water bath, immersed in ethanol, and then dried.

In Patent Document 2, a separator is obtained in such a manner that a microporous polyethylene membrane having a thickness of 16 $\mu$m is coated on both sides with a resin solution obtained by dissolving 2 wt% of polyvinylidene fluoride (PVDF) in $N$-methyl-2-pyrrolidone (NMP) and adding alumina particles into the PVDF/NMP solution such that the volume ratio of PVDF to alumina particles is 5:95 (volume fraction: 95.0 vol%), phase-separated in a water bath, dried, immersed in a water bath, immersed in ethanol, and then dried.

In Patent Document 3, a nonaqueous secondary battery separator is obtained in such a manner that a porous polyolefin membrane having a thickness of 9 $\mu$m is coated on both sides equally with a coating solution obtained by dissolving 8% by weight of a polyvinylidene fluoride resin in a mixed solvent comprising dimethylacetamide and tripropylene glycol at a weight ratio of 7/3, solidified by being immersed in a coagulating liquid, washed with water, and dried.

Patent Document 4 discloses a composite porous membrane obtained by immersion of a microporous polypropylene membrane having a thickness of 25.6 $\mu$m in a dope composed mainly of polyvinylidene fluoride, followed by the process of a coagulation bath, washing with water, and drying.

In Patent Document 5, a battery separator is obtained in such a manner that a polyethylene terephthalate resin film is coated with a varnish (solid component concentration: 5.8% by weight) comprising polyvinylidene fluoride (12% $N$-methylpyrrolidone solution), $N$-methyl-2-pyrrolidone, and ethylene glycol, passed through a low humidity zone at a temperature of 25°C and an absolute humidity of 1.8 g/m$^3$ for 8 seconds, and then through a high humidity zone at a temperature of 25°C and an absolute humidity of 12 g/m$^3$ for 5 seconds to form a semi-gel like fluorine resin film, and the fluorine resin film is transferred to a porous polyethylene membrane (thickness: 9 $\mu$m).

Patent Document 1: JP 2006-027024 A
Patent Document 2: JP 2011-138761 A
Patent Document 3: Japanese Patent No. 4988973
Patent Document 4: JP 2003-171495 A
Patent Document 5: JP 2012-043762 A
Patent Document 6: WO2007/60991

Summary of the Invention

Problems to be Solved by the Invention

Unfortunately, the electrolyte permeability and shutdown properties of these battery separators were not entirely satisfactory.

In Patent Documents 1 to 5, a modifying porous layer comprising a fluorine resin having electrode adhesion is laminated to a porous polyolefin membrane, but simply laminating such a modifying porous layer to a porous polyolefin membrane cannot prevent a decrease in shutdown properties because resin components contained in the modifying porous layer penetrate into pores of the polyolefin porous membrane. Furthermore, a microporous polyolefin membrane of relatively small thickness, in which the absolute amount of polyolefin resin for blocking the pores is small, tends to result in a reduced shutdown function, and when a modifying porous layer, particularly, a modifying porous layer with heat resistance is laminated to such a microporous membrane, the shutdown function may be further reduced.

"Porous polyolefin membrane of relatively small thickness" as used herein means a porous polyolefin membrane having a thickness of 16 $\mu$m or less.

Patent Document 6 discloses a porous polyolefin membrane comprising a polyethylene resin, and having (a) a shutdown temperature of 135°C or lower, (b) a rate of air resistance change of $1 \times 10^4$ sec/100 cc/°C or more, (c) a transverse shrinkage rate at 130°C of 20% or less. The porous polyolefin membrane of Patent Document 6 has excellent shutdown properties, but there is a limit to the improvement in electrolyte permeability and electrode adhesion by the porous polyolefin membrane alone. Furthermore, simply laminating the modifying porous layer comprising a fluorine resin of Patent Documents 1 to 5 to the porous polyolefin membrane of Patent Document 6 for the purpose of improving the electrode adhesion cannot prevent a decrease in shutdown properties as described above.

In other words, hitherto there has been no laminated microporous polyolefin membrane that is satisfactory in electrolyte permeability and electrode adhesion while maintaining the shutdown properties of the microporous polyolefin membrane.

Thus, an object of the present invention is to provide a battery separator having excellent electrolyte permeability suitable for high-capacity batteries, wherein a microporous polyolefin membrane is laminated without significantly reducing its shutdown properties to a modifying porous layer having electrode adhesion while maintaining the adhesion therebetween, and a process for producing the battery separator.

Means for Solving the Problems

To solve the problems described above, the battery separator of the present invention has the following constitution:

A battery separator comprising a microporous polyolefin membrane having a thickness of 16 $\mu$m or less, and a modifying porous layer comprising a fluorine resin and an inorganic particle or cross-linked polymer particle, the modifying porous layer being laminated on one side of the microporous polyolefin membrane, wherein the microporous polyolefin membrane has (a) a shutdown temperature (a temperature at which an air resistance measured while heating the microporous polyolefin membrane at a temperature rising rate of 5°C/min reaches $1 \times 10^5$ sec/100 cc) of 135°C or lower and (b) a rate of air resistance change (a gradient at an air resistance of $1 \times 10^4$ sec/100 cc of a curve representing the dependency of the air resistance on temperature) of $1 \times 10^4$ sec/100 cc/°C or more, and the battery satisfies separator Expression 1 and Expression 2.

$$0.01 \leq \text{absT}(1200) \leq 0.30 \qquad \text{Expression 1}$$

absT(1200): Absorbance of an absorption having a peak at or near 1,200 cm$^{-1}$ per 10 $\mu$m thickness of a microporous polyolefin membrane, as measured by infrared spectroscopy (transmission method) after peeling a modifying porous layer off the microporous polyolefin membrane

$$0.001 \le absR(1200) \le 0.030 \quad \text{Expression 2}$$

absR(1200): Absorbance of a maximum peak at or near 1,200 cm$^{-1}$, as measured by infrared spectroscopy (reflection method) on the surface of a microporous polyolefin membrane that is opposite to a modifying porous layer

In the battery separator of the present invention, the microporous polyolefin membrane preferably has a transverse shrinkage rate at 130°C (measured by thermomechanical analysis under a load of 2 gf at a temperature rising rate of 5°C/min) of 20% or less.

In the battery separator of the present invention, the peeling strength between the microporous polyolefin membrane and the modifying porous layer is preferably at least 1.0 N/25 mm.

In the battery separator of the present invention, the microporous polyolefin membrane preferably comprises polyethylene.

In the battery separator of the present invention, the contained amount of the inorganic particle or cross-linked polymer particle is preferably 80% by weight to 97% by weight based on the amount of the modifying porous layer.

In the battery separator of the present invention, the inorganic particle is preferably at least one selected from silica, titanium dioxide, and alumina.

In the battery separator of the present invention, the cross-linked polymer particle is preferably at least one selected from cross-linked polystyrene particle, cross-linked acrylic resin particle, and cross-linked methyl methacrylate particle.

To solve the problems described above, the process for producing the battery separator of the present invention has the following constitution:

A process for producing the battery separator described above, comprising the following steps:

(1) preparing a polyolefin resin solution by melt-blending a polyolefin resin comprising a polyethylene resin with a membrane-forming solvent in a twin-screw extruder such that Q/Ns, the ratio of a feed rate Q (kg/h) of the polyolefin resin to a screw speed Ns (rpm), is 0.1 to 0.55 Kg/h/rpm, the polyethylene resin having a total endotherm at 125°C that is not more than 20% of a heat of crystal melting measured by differential scanning calorimetry at a temperature rising rate of 10°C/min, and a temperature of 135°C or lower at the time when the endotherm reaches 50% of the heat of crystal melting;

(2) forming a gel-like sheet by extruding the polyolefin resin solution through a die and cooling the extrudate;

(3) stretching the gel-like sheet at a rate of 1 to 80%/sec relative to 100% of the length before stretching;

(4) removing the membrane-forming solvent from the stretched gel-like sheet;

(5) drying the gel-like sheet from which the membrane-forming solvent has been removed to prepare a microporous polyolefin membrane;

(6) applying a varnish to the microporous polyolefin membrane, the varnish comprising a fluorine resin and an inorganic particle or cross-linked polymer particle, wherein the fluorine resin concentration in solution components excluding the inorganic particle or cross-linked polymer is 0.5% by weight to 2.5% by weight;

(7) passing the microporous polyolefin membrane coated with the varnish through a low humidity zone having an absolute humidity of less than 6 g/m$^3$;

(8) passing the microporous polyolefin membrane passed through the low humidity zone through a high humidity zone having an absolute humidity of 6 g/m$^3$ or more; and

(9) immersing the microporous polyolefin membrane passed through the high humidity zone in a coagulation bath to convert the coating layer comprising the fluorine resin into a modifying porous layer, followed by washing and drying, to obtain a battery separator.

Effects of the Invention

According to the present invention, a battery separator suitable for high-capacity batteries can be obtained which has excellent shutdown properties and electrode adhesion as well as excellent electrolyte permeability.

Brief Description of the Drawings

FIG. 1 is a typical example of a melting endotherm curve;
FIG. 2 is the same melting endotherm curve as in FIG. 1 showing a total endotherm at 125°C;
FIG. 3 is the same melting endotherm curve as in FIG. 1 showing a T (50%), a temperature at the time when the endotherm reaches 50% of a heat of crystal melting;
FIG. 4 is a typical example of a temperature T/(air resistance p)$^{-1}$ curve for determining a shutdown start temperature; and
FIG. 5 is a typical example of a temperature T/air resistance p curve for determining a shutdown temperature, a rate of air resistance change, and a meltdown temperature.

Mode for Carrying Out the Invention

In the present invention, using an advanced coating technique, a resin component, which will form a modifying porous layer having electrolyte permeability, heat resistance, and electrode adhesion, is finely infiltrated deep into pores of a microporous polyolefin membrane having excellent shutdown properties, heat resistance, and a high rate of air resistance change which is produced using a polyolefin resin having specific properties by a highly-controlled membrane-forming technique, whereby increase in shutdown temperature due to infiltration of the resin component in the modifying porous layer into the microporous membrane can be reduced to a low level, and a battery separator having excellent electrolyte permeability can be obtained. Furthermore, the synergistic effect of the excellent heat resistance of the microporous polyolefin membrane and the heat resistance of the modifying porous layer provides a battery separator having extremely excellent heat resistance and improved electrode adhesion.

The battery separator of the present invention will be described below, but this description is, of course, not intended to limit the invention.

As a result of intensive study in view of the object described above, the present inventors, focusing on the fact that (i) a microporous polyolefin membrane having excellent heat shrinkage resistance in a temperature range from a shutdown start temperature to a shutdown temperature and having a low shutdown temperature can be obtained from a polyolefin resin comprising a polyethylene resin having a total endotherm at 125°C that is not more than 20% of a heat of crystal melting measured by differential scanning calorimetry at a predetermined temperature rising rate, and a temperature of 135°C or lower at the time when the endotherm reaches 50% of the heat of crystal melting, and (ii) a microporous polyolefin membrane having high physical stability before the start of a shutdown, a high rate of air resistance change after the start of a shutdown, excellent heat shrinkage resistance in a temperature range from a shutdown start temperature to a shutdown temperature, and a low shutdown temperature can be obtained by melt-blending a polyolefin resin comprising the above polyethylene resin with a membrane-forming solvent in a twin-screw extruder such that Q/Ns, the ratio of a feed rate Q (kg/h) of the polyolefin resin to a screw speed Ns (rpm), is 0.1 to 0.55 kg/h/rpm to prepare a polyolefin resin solution, extruding the resulting polyolefin resin solution through a die, cooling the extrudate into a gel-like sheet, and removing the membrane-forming solvent from the gel-like sheet obtained, discovered that by using this microporous polyolefin membrane, an excellent battery separator can be obtained that undergoes only a slight decrease in shutdown properties even if a modifying porous layer excellent in heat resistance and electrode adhesion is laminated.

Thus, the microporous polyolefin membrane used in the present invention is characterized by comprising a polyethylene resin and having (a) a shutdown temperature (a temperature at which an air resistance measured while heating the microporous polyolefin membrane at a temperature rising rate of 5°C/min reaches $1 \times 10^5$ sec/100 cc) of 135°C or lower, (b) a rate of air resistance change (a gradient at an air resistance of $1 \times 10^4$ sec/100 cc of a curve representing the dependency of the air resistance on temperature) of $1 \times 10^4$ sec/100 cc/°C or more, and (c) a transverse shrinkage rate at 130°C (measured by thermomechanical analysis under a load of 2 gf at a temperature rising rate of 5°C/min) of 20% or less.

The process for producing the microporous polyolefin membrane in the present invention is characterized by comprising (1) preparing a polyolefin resin solution by melt-blending a polyolefin resin comprising a polyethylene resin with a membrane-forming solvent in a twin-screw extruder such that Q/Ns, the ratio of a feed rate Q (kg/h) of the polyolefin resin to a screw speed Ns (rpm), is 0.1 to 0.55 Kg/h/rpm, the polyethylene resin having a total endotherm at 125°C that is not more than 20% of a heat of crystal melting measured by differential scanning calorimetry at a temperature rising rate of 10°C/min, and a temperature of 135°C or lower at the time when the endotherm reaches 50% of the heat of crystal melting, (2) forming a gel-like sheet by extruding the polyolefin resin solution through a die and cooling the extrudate, (3) stretching the gel-like sheet, and (4) removing the membrane-forming solvent.

The microporous polyolefin membrane used in the present invention will be described in detail.

[1] Polyolefin resin

The polyolefin resin that will form the microporous polyolefin membrane used in the present invention comprises the polyethylene resin described below.

(1) Heat of crystal melting of polyethylene resin

The polyethylene resin has a total endotherm at 125°C (hereinafter referred to as "ΔHm ($\leq$ 125°C)") that is not more than 20% of a heat of crystal melting ΔHm measured by differential scanning calorimetry (DSC) at a temperature rising rate of 10°C/min, and a temperature of 135°C or lower at the time when the endotherm reaches 50% of the heat of crystal melting ΔHm (hereinafter referred to as "T (50%)").

T (50%) is a parameter affected by the configuration of primary structures (e.g., molecular weight, molecular weight distribution, degree of branching, molecular weight of branched chains, distribution of branching points, and percentage of copolymers) and higher-order structures (e.g., crystal size, crystal distribution, and crystal lattice regularity) of polyethylene [homopolymer or ethylene/α-olefin copolymer (the same applies hereinafter)], and is an indicator of shutdown temperature and rate of air resistance change after the start of a shutdown. If T (50%) is higher than 135°C, the microporous polyolefin membrane, when used as a lithium battery separator, exhibits poor shutdown properties and a low shutdown response at overheating.

ΔHm ($\leq$ 125°C) is a parameter affected by molecular weight, degree of branching, and degree of molecular entanglement of polyethylene. When ΔHm ($\leq$ 125°C) is not more than 20% and T (50%) is 135°C or lower, a microporous membrane can be obtained having a low shutdown temperature and excellent heat shrinkage resistance in a temperature range from a shutdown start temperature to a shutdown temperature. ΔHm ($\leq$ 125°C) is preferably 17% or less.

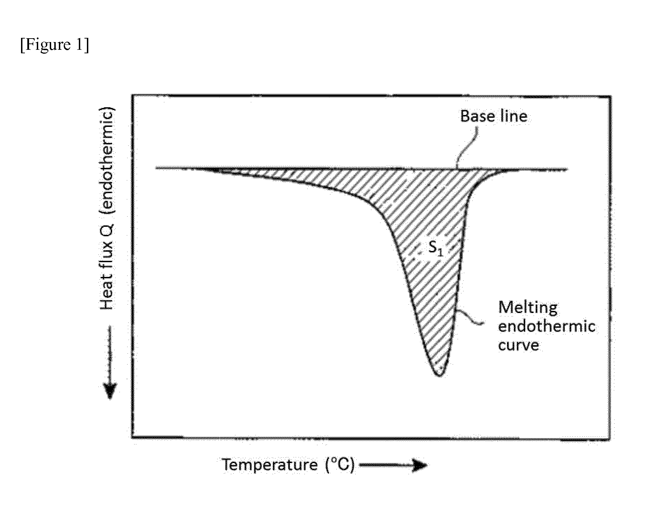

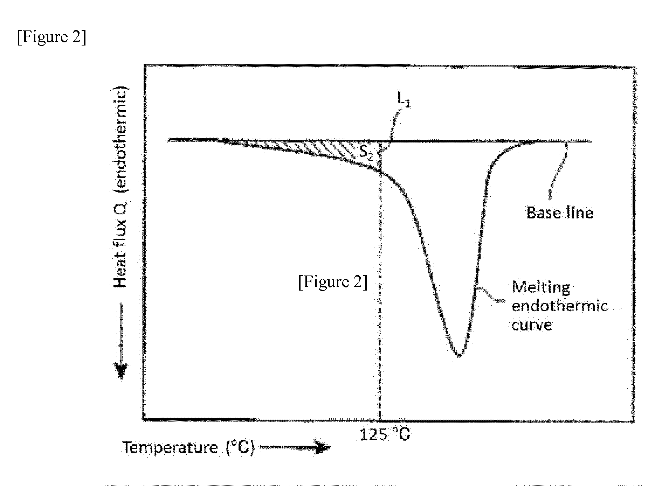

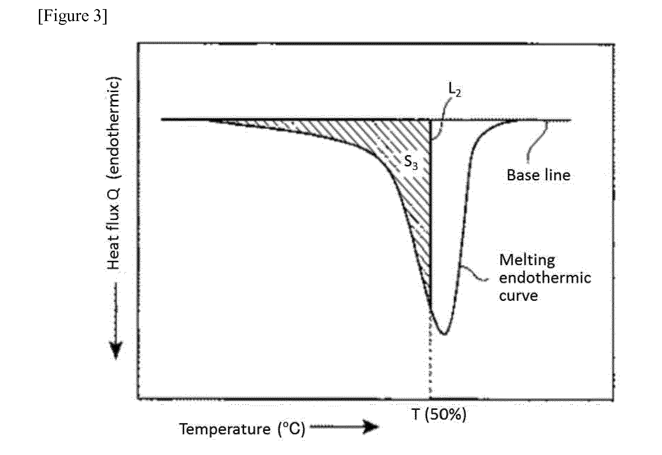

The heat of crystal melting ΔHm (unit: J/g) of the polyethylene resin is determined by the following procedure in accordance with JIS K 7122. First, a polyethylene resin sample (a molded product obtained by melt-pressing at 210°C (thickness: 0.5 mm)) is placed in a sample holder of a differential scanning calorimeter (Pyris Diamond DSC available from Perkin Elmer, Inc.), heat-treated at 230°C for 1 minute in a nitrogen atmosphere, cooled to 30°C at 10°C/min, kept at 30°C for 1 minute, and heated to 230°C at a rate of 10°C/min. As shown in FIG. 1, an endotherm (unit: J) is calculated from an area $S_1$ of the region (shown by hatching) enclosed by a DSC curve (melting endotherm curve) obtained through temperature rising and a baseline, and the endotherm is divided by the weight (unit: g) of the sample to thereby determine the heat of crystal melting ΔHm. ΔHm ($\leq$ 125°C) (unit: J/g), as shown in FIG. 2, is a percentage (% by area) of an area $S_2$ in the area $S_1$, the $S_2$ being an area of the region (shown by hatching) at the lower temperature side of a straight line $L_1$ (at 125°C) perpendicular to the baseline. T (50%), as shown in FIG. 3, is a temperature at which an area $S_3$ (the area of the region (shown by hatching) at the lower temperature side of a straight line $L_2$ perpendicular to the baseline) reaches 50% of the area $S_1$.

(2) Components of polyethylene resin

The polyethylene resin may be a single substance or a composition of two or more polyethylenes as long as its ΔHm ($\leq$ 125°C) and T (50%) are within the above ranges. The polyethylene resin is preferably (a) an ultra-high molecular weight polyethylene, (b) a polyethylene other than ultra-high molecular weight polyethylene, or (c) a mixture of an ultra-high molecular weight polyethylene with a polyethylene other than ultra-high molecular weight polyethylene (polyethylene composition). In every case, the mass average molecular weight (Mw) of the polyethylene resin, though not critical, is preferably $1 \times 10^4$ to $1 \times 10^7$, more preferably $5 \times 10^4$ to $15 \times 10^6$, and particularly preferably $1 \times 10^5$ to $5 \times 10^6$.

(a) Ultra-high molecular weight polyethylene

The ultra-high molecular weight polyethylene has a Mw of $7 \times 10^5$ or more. The ultra-high molecular weight polyethylene may be not only an ethylene homopolymer but also an ethylene/α-olefin copolymer containing a small amount of other α-olefins. Preferred examples of α-olefins other than ethylene include propylene, butene-1, pentene-1, hexene-1, 4-methylpentene-1, octene-1, vinyl acetate, methyl methacrylate, and styrene. The Mw of the ultra-high molecular weight polyethylene is preferably $1 \times 10^6$ to $15 \times 10^6$, more preferably $1 \times 10^6$ to $5 \times 10^6$.

(b) Polyethylene other than ultra-high molecular weight polyethylene

The polyethylene other than ultra-high molecular weight polyethylene has a Mw of not less than $1 \times 10^4$ but less than $7 \times 10^5$. High density polyethylene, medium density polyethylene, branched low density polyethylene, and linear low density polyethylene are preferred, and high density polyethylene is more preferred. The polyethylene having a Mw of not less than $1 \times 10^4$ but less than $7 \times 10^5$ may be not only an ethylene homopolymer but also a copolymer containing a small amount of other α-olefins such as propylene, butene-1, and hexene-1. Such a copolymer is preferably produced using a single-site catalyst. The polyethylene other than ultra-high molecular weight polyethylene is not limited to a single substance and may be a mixture of two or more polyethylenes other than ultra-high molecular weight polyethylene.

(c) Polyethylene composition

The polyethylene composition is a mixture of an ultra-high molecular weight polyethylene with a Mw of $7 \times 10^5$ or more and a polyethylene other than ultra-high molecular weight polyethylene with a Mw of not less than $1 \times 10^4$ but less than $7 \times 10^5$ (at least one selected from the group consisting of high density polyethylene, medium density polyethylene, branched low density polyethylene, and linear low density polyethylene). The ultra-high molecular weight polyethylene and the polyethylene other than ultra-high molecular weight polyethylene may be the same as described above. The molecular weight distribution (mass average molecular weight/number average molecular weight (Mw/Mn)) of this polyethylene composition can be easily controlled depending on the intended use. The polyethylene composition is preferably a composition of the above ultra-high molecular weight polyethylene and high density polyethylene. The Mw of the high density polyethylene used in the polyethylene composition is preferably not less than $1 \times 10^5$ but less than $7 \times 10^5$, more preferably $1 \times 10^5$ to $5 \times 10^5$, and most preferably $2 \times 10^5$ to $4 \times 10^5$. The amount of the ultra-high molecular weight polyethylene in the polyethylene composition is preferably 1% by mass or more, more preferably 2 to 50% by mass, based on 100% by mass of the total polyethylene composition.

(d) Molecular weight distribution Mw/Mn

Mw/Mn is a measure of molecular weight distribution, and larger values indicate wider molecular weight distributions.

In every case where the polyethylene resin is one of the (a) to (c) above, the Mw/Mn of the polyethylene resin, though not critical, is preferably 5 to 300, more preferably 10 to 100. When the Mw/Mn is less than 5, there are excessive high-molecular-weight components, resulting in difficulty in melt extrusion, and when the Mw/Mn is more than 300, there are excessive low-molecular weight components, resulting in a microporous membrane with decreased strength. The Mw/Mn of polyethylene (homopolymer or ethylene/$\alpha$-olefin copolymer) can be properly controlled by multistage polymerization. The multistage polymerization method is preferably two-stage polymerization in which a high-molecular-weight polymer component is formed at the first stage and a low-molecular-weight polymer component is formed at the second stage. In the case of the polyethylene composition, the larger the Mw/Mn, the larger the difference in Mw between the ultra-high molecular weight polyethylene and the polyethylene other than ultra-high molecular weight polyethylene, and vice versa. The Mw/Mn of the polyethylene composition can be properly controlled by the molecular weight and mixing ratio of the components.

The polyethylene resins as described above may be a commercially available product. Examples of the commercially available product include Nipolon Hard (registered trademark) 6100A, 7300A, 5110A (which are available from Tosoh Corporation), and HI-ZEX (registered trademark) 640UF, 780UF (which are available from Prime Polymer Co., Ltd.).

(3) Other addable resins

The polyolefin resin may be a composition comprising, together with the polyethylene resin, a polyolefin other than the polyethylene resin or a resin other than polyolefins as long as the effects of the present invention are not impaired. Therefore, it should be understood that the term "polyolefin resin" includes not only polyolefins but also resins other than polyolefins. The polyolefin other than the polyethylene resin can be at least one selected from the group consisting of polypropylene, polybutene-1, polypentene-1, polyhexene-1, poly-4-methylpentene-1, polyoctene-1, polyvinyl acetate, polymethyl methacrylate, polystyrene, ethylene/$\alpha$-olefin copolymer, each having a Mw of $1 \times 10^4$ to $4 \times 10^6$, and a polyethylene wax having a Mw of $1 \times 10^3$ to $1 \times 10^4$. Polypropylene, polybutene-1, polypentene-1, polyhexene-1, poly-4-methylpentene-1, polyoctene-1, polyvinyl acetate, polymethyl methacrylate, and polystyrene may be not only a homopolymer but also a copolymer containing other $\alpha$-olefins.

Examples of the resin other than polyolefin resins include heat resistant resins having a melting point or a glass transition temperature (Tg) of 150°C or higher. The heat resistant resin is preferably a crystalline resin (including partially crystalline resins) having a melting point of 150°C or higher and an amorphous resin having a Tg of 150°C or higher. The melting point and Tg can be measured according to JIS K 7121, and so on.

[2] Process for producing microporous polyolefin membrane

The process for producing the microporous polyolefin membrane used in the present invention comprises the steps of (1) preparing a polyolefin resin solution by melt-blending the above polyolefin resin and a membrane-forming solvent, (2) extruding the polyolefin resin solution through a die, (3) forming a gel-like sheet by cooling the extrudate, (4) stretching, (5) removing the membrane-forming solvent, and (6) drying. In other words, it is a production process what is called Wet process. Between the steps (5) and (6), any of (7) hot roll treatment, (8) hot solvent treatment, and (9) heat-setting may be optionally performed. In addition, after the step (6), (10) stretching the microporous membrane, (11) heat treatment, (12) cross-linking with ionizing radiation, (13) hydrophilization, (14) surface coating, and other steps can be performed.

(1) Preparing polyolefin resin solution

The polyolefin resin solution is prepared by adding an appropriate membrane-forming solvent to the polyolefin resin mentioned above and then melt-blending the resulting mixture. To the polyolefin resin solution, the various additives described above such as inorganic fillers, antioxidants, UV absorbers, antiblocking agents, pigments, and dyes can be optionally added as long as the effects of the present invention are not impaired. For example, fine silicate powder can be added as a pore-forming agent.

The membrane-forming solvent can be a liquid solvent or a solid solvent. Examples of liquid solvents include aliphatic or cyclic hydrocarbons such as nonane, decane, decalin, paraxylene, undecane, dodecane, and liquid paraffin; and mineral oil distillates having a boiling point equivalent to those of these hydrocarbons. To obtain a gel-like sheet with a stable solvent content, it is preferable to use a nonvolatile liquid solvent such as liquid paraffin. The solid solvent preferably has a melting point of 80°C or lower, and examples of such solid solvents include paraffin wax, ceryl alcohol, stearyl alcohol, and dicyclohexyl phthalate. The liquid solvent and the solid solvent may be used in combination.

The viscosity of the liquid solvent is preferably 30 to 500 cSt at 25°C, more preferably 30 to 200 cSt. If the viscosity at 25°C is less than 30 cSt, foaming is likely to occur, resulting in difficulty in blending. If it is more than 500 cSt, it is difficult to remove the liquid solvent.

The melt-blending method, though not critical, is preferably uniform blending in an extruder. This method is suitable for preparing a high-concentration polyolefin resin solution. The melt-blending temperature, which may be set as appropriate depending on the components of the polyolefin resin, is generally from (the melting point Tm of the polyolefin resin + 10°C) to (Tm + 110°C). In cases where the polyolefin resin is (a) an ultra-high molecular weight polyethylene, (b) a polyethylene other than ultra-high molecular weight polyethylene, or (c) a polyethylene composition, the melting point Tm of the polyolefin resin is a melting point of (a), (b), or (c), and in cases where the polyolefin resin is a composition containing a polyolefin other than polyethylene or a heat resistant resin, the melting point Tm of the polyolefin resin is a melting point of ultra-high molecular weight polyethylene, polyethylene other than ultra-high molecular weight polyethylene, or a polyethylene composition contained in the composition, and so on. The ultra-high molecular weight polyethylene, the polyethylene other than ultra-high molecular weight polyethylene, and the polyethylene composition each have a melting point of about 130 to 140°C. Accordingly, the melt-blending temperature is preferably 140 to 250°C, more preferably 170 to 240°C. The membrane-forming solvent may be added before the start of blending or may be introduced, during blending, into a twin-screw extruder at an intermediate point; the latter is preferred. In the melt-blending, it is preferable to add an antioxidant to prevent oxidation of the polyolefin resin

The extruder is preferably a twin-screw extruder. The twin-screw extruder may be an intermeshing co-rotating twin-screw extruder, an intermeshing counter-rotating twin-screw extruder, a non-intermeshing co-rotating twin-screw extruder, or a non-intermeshing counter-rotating twin-screw extruder. The intermeshing co-rotating twin-screw extruder is preferred because it has a self-cleaning function and can achieve a higher rotation speed with a smaller load than that of the counter-rotating twin-screw extruder.

When the polyolefin resin is introduced into a twin-screw extruder, Q/Ns, the ratio of a feed rate Q (kg/h) of the polyolefin resin to a screw speed Ns (rpm), is preferably 0.1 to 0.55 kg/h/rpm. If Q/Ns is less than 0.1 kg/h/rpm, the polyolefin resin will experience excessive shear failure, resulting in a low meltdown temperature, which leads to poor rupture resistance during the temperature rising after shutdown. If Q/Ns is more than 0.55 kg/h/rpm, uniform blending cannot be achieved. Q/Ns is more preferably 0.2 to 0.5 kg/h/rpm. The screw speed Ns is more preferably 250 rpm or more. The upper limit of the screw speed Ns is, though not particularly restricted, preferably 500 rpm.

The concentration of the polyolefin resin is 10 to 50% by mass, preferably 20 to 45% by mass, based on 100% by mass of the total amount of the polyolefin resin and the membrane-forming solvent. If the concentration of the polyolefin resin is less than 10% by mass, productivity decreases, which is not preferred. In addition, large swelling and neck-in occur at the die exit when the polyolefin resin solution is extruded, leading to a reduction in moldability and self-supportability of an extrudate. If the concentration of the polyolefin resin is more than 50% by mass, moldability of the extrudate is reduced.

(2) Extruding

The melt-blended polyolefin resin solution is extruded from an extruder through a die directly or after being pelletized. When a sheet-forming die having a rectangular orifice is used, the die typically has a gap of 0.1 to 5 mm and is heated to 140 to 250°C during extrusion. The extrusion speed of the heated solution is preferably 0.2 to 15 m/min.

(3) Forming gel-like sheet

The extrudate from the die is cooled to form a gel-like sheet. The cooling is preferably carried out to at least a gelation temperature at a rate of 50°C/min or higher. Such cooling fixes the structure in which the polyolefin resin is microphase-separated by the membrane-forming solvent (gel structure comprising a polyolefin resin phase and a membrane-forming solvent phase). The cooling is preferably carried out to 25°C or lower. In general, a lower cooling rate results in larger pseudo-cell units, and the resulting gel-like sheet will have a coarse high-order structure, whereas a higher cooling rate results in denser cell units. A cooling rate of less than 50°C/min leads to increased crystallization, making it difficult to form a gel-like sheet suitable for stretching. Examples of the cooling method that can be used include contacting with a cooling medium such as cold air or cooling water and contacting with a cooling roll, and the method using a cooling roll is preferred.

The cooling roll temperature is preferably from (the crystallization temperature Tc of the polyolefin resin - 120°C) to (Tc - 5°C), more preferably from (Tc - 115°C) to (Tc - 15°C). A cooling roll temperature higher than Tc - 5°C will not allow sufficiently rapid cooling. In cases where the polyolefin resin is (a) the ultra-high molecular weight polyethylene, (b) the polyethylene other than ultra-high molecular weight polyethylene, or (c) the polyethylene composition described above, the crystallization temperature Tc of the polyolefin resin is a crystallization temperature of (a), (b), or (c). In cases where the polyolefin resin is a composition containing a polyolefin other than polyethylene or a heat resistant resin, the crystallization temperature Tc of the polyolefin resin is a crystallization temperature of an ultra-high molecular weight polyethylene, a polyethylene other than ultra-high molecular weight polyethylene, or a polyethylene composition contained in the composition, and so on. "Crystallization temperature" herein refers to a value determined according to JIS K 7121. The ultra-high molecular weight polyethylene, the polyethylene other than ultra-high molecular weight polyethylene, and the polyethylene composition generally have a crystallization temperature of 110 to 115°C. Accordingly, the cooling roll temperature is set in the range of -10 to 105°C, preferably in the range of -5°C to 95°C. The contact time of the cooling roll and the sheet is preferably 1 to 30 seconds, more preferably 2 to 15 seconds.

(4) Stretching

The gel-like sheet before being washed is preferably stretched in at least one direction. After being heated, the gel-like sheet is preferably stretched to a predetermined magnification by a tenter method or a roll method. The gel-like sheet, which contains a membrane-forming solvent, can be uniformly stretched. The stretching improves mechanical strength and expands pores, which is particularly preferred in the use as a battery separator. The stretching may be monoaxial stretching or biaxial stretching, and the biaxial stretching is preferred. The biaxial stretching may be simultaneous biaxial stretching, sequential stretching, or multi-stage stretching (e.g., a combination of simultaneous biaxial stretching and sequential stretching), and the simultaneous biaxial stretching is particularly preferred.

The stretching magnification, in the case of monoaxial stretching, is preferably 2X or more, more preferably 3 to 30X. In the case of biaxial stretching, it is preferably at least 3X in both directions, i.e., 9X or more in area magnification. An area magnification of less than 9X results in insufficient stretching, and a high-modulus and high-strength microporous membrane cannot be obtained. An area magnification of more than 400X puts restrictions on stretching apparatuses, stretching operation, and the like. The upper limit of the area magnification is preferably 50X.

The stretching temperature is preferably not higher than the melting point Tm of the polyolefin resin + 10°C, more preferably in the range of not lower than the crystal dispersion temperature Tcd described above and lower than the melting point Tm described above. A stretching temperature higher than Tm + 10°C melts the polyethylene resin, and the stretching cannot orient molecular chains. A stretching temperature lower than Tcd softens the polyethylene resin so poorly that a membrane is likely to be broken by stretching, and, therefore, high-magnification stretching cannot be performed. As described above, the polyethylene resin has a crystal dispersion temperature of about 90 to 100°C. Accordingly, the stretching temperature is usually in the range of 90 to 140°C, and preferably in the range of 100 to 130°C.

The stretching rate of the gel-like sheet is 1 to 80%/sec. In the case of monoaxial stretching, it is 1 to 80%/sec in the longitudinal direction (MD) or the transverse direction (TD). In the case of biaxial stretching, it is 1 to 80%/sec in both MD and TD. The stretching rate (%/sec) of the gel-like sheet is expressed as a percentage relative to 100% of the length before stretching. A stretching rate of less than 1 %/sec results in unstable stretching. A stretching rate of more than 80%/sec leads to reduced heat shrinkage resistance. The stretching rate of the gel-like sheet is more preferably 2 to 70%/sec. In the case of biaxial stretching, the stretching rates in MD and TD may be the same or different as long as they are 1 to 80%/sec, though they are preferably the same.

The stretching described above causes cleavage between polyethylene crystal lamellas, and the polyethylene phase (ultra-high molecular weight polyethylene, polyethylene other than ultra-high molecular weight polyethylene, or polyethylene composition) becomes finer, forming large numbers of fibrils. The resulting fibrils form a three-dimensional network structure (three-dimensionally and irregularly connected network structure).

Depending on the desired physical properties, the stretching can be carried out with a temperature distribution in the membrane thickness direction, whereby a microporous membrane with more excellent mechanical strength is provided. A method therefor is described specifically in Japanese Patent No. 3347854.

### (5) Removing membrane-forming solvent

To remove (wash away) the membrane-forming solvent, a washing solvent is used. Since the polyolefin resin phase in the gel-like sheet is separated from the membrane-forming solvent phase, removing the membrane-forming solvent provides a microporous membrane. The removal (washing away) of the membrane-forming solvent can be carried out using a known washing solvent. Examples of washing solvents include volatile solvents such as saturated hydrocarbons (e.g., pentane, hexane, heptane), chlorinated hydrocarbons (e.g., methylene chloride, carbon tetrachloride), ethers (e.g., diethyl ether, dioxane), ketones (e.g., methyl ethyl ketone), linear fluorocarbons (e.g., trifluoroethane, $C_6F_{14}$, $C_7F_{16}$), cyclic hydrofluorocarbons (e.g., $C_5H_3F_7$), hydrofluoroethers (e.g., $C_4F_9OCH_3$, $C_4F_9OC_2H_5$), and perfluoroethers (e.g., $C_4F_9OCF_3$, $C_4F_9OC_2F_5$). These washing solvents have a low surface tension (e.g., 24 mN/m or lower at 25°C). Using a washing solvent having a low surface tension prevents a micropore-forming network structure from shrinking due to a surface tension at gas-liquid interfaces during drying after washing, thereby providing a microporous membrane having a high porosity and high permeability.

Membrane washing can be carried out by immersion in a washing solvent, showering a washing solvent, or the combination thereof. The washing solvent is preferably used in an amount of 300 to 30,000 parts by mass based on 100 parts by mass of the membrane before being washed. Washing with a washing solvent is preferably carried out until the amount of the remaining membrane-forming solvent is reduced to less than 1% by mass of the amount initially added.

### (6) Drying membrane

The microporous polyolefin membrane obtained by removing the membrane-forming solvent is dried, for example, by heat-drying or air-drying. The drying temperature is preferably equal to or lower than the crystal dispersion temperature Tcd of the polyolefin resin, particularly preferably 5°C or more lower than the Tcd.

In cases where the polyolefin resin is (a) the ultra-high molecular weight polyethylene, (b) the polyethylene other than ultra-high molecular weight polyethylene, or (c) the polyethylene composition described above, the crystal dispersion temperature Tcd of the polyolefin resin is a crystal dispersion temperature of (a), (b), or (c). In cases where the polyolefin resin is a composition containing a polyolefin other than polyethylene or a heat resistant resin, the crystal dispersion temperature Tcd of the polyolefin resin is a crystal dispersion temperature of an ultra-high molecular weight polyethylene, a polyethylene other than ultra-high molecular weight polyethylene, or a polyethylene composition contained in the composition, and so on. The crystal dispersion temperature herein refers to a value determined by measuring temperature characteristics of dynamic viscoelasticity according to ASTM D 4065. The ultra-high molecular weight polyethylene, the polyethylene other than ultra-high molecular weight polyethylene, and the polyethylene composition described above each have a crystal dispersion temperature of about 90 to 100°C.

The drying is preferably carried out until the amount of the remaining washing solvent is reduced to 5% by mass or less, more preferably 3% by mass or less, based on 100% by mass (dry weight) of the microporous membrane. When the remaining washing solvent is in this preferred range, the porosity of the microporous membrane will not be reduced when heat treatment is performed subsequently, which leads to excellent permeability.

### (7) Hot roll treatment

At least one side of the gel-like sheet may be brought into contact with a heat roll, whereby the compression resistance of the microporous membrane is improved. A specific method therefor is described, for example, in JP 2006-248582 A.

### (8) Hot solvent treatment

The gel-like sheet may be brought into contact with a hot solvent, whereby a microporous membrane more excellent in mechanical strength and permeability is provided. A method therefor is described specifically in WO 2000/20493.

### (9) Heat-setting

The stretched gel-like sheet may be heat-set. A specific method therefor is described, for example, in JP 2002-256099 A.

(10) Stretching microporous membrane

The dried microporous polyolefin membrane may be stretched in at least one direction as long as the effects of the present invention are not impaired. This stretching can be carried out by a tenter method or the other method similarly to the above while heating the membrane.

The temperature for stretching the microporous membrane is preferably not higher than the melting point Tm of the polyolefin resin, more preferably in the range of the Tcd to the Tm described above. Specifically, it is in the range of 90 to 135°C, and preferably in the range of 95 to 130°C. In the case of biaxial stretching, the magnification is preferably 1.1 to 2.5X in at least one direction, more preferably 1.1 to 2.0X. A magnification in this preferred range can provide a good shutdown temperature.

(11) Heat treatment

The dried membrane is preferably heat-set and/or relaxed by a known method. The heat-setting or relaxing may be appropriately selected depending on the physical properties the microporous polyolefin membrane requires. The heat treatment stabilizes crystals and makes lamellas uniform. It is particularly preferable to relax the microporous membrane after stretching it once.

(12) Cross-linking membrane

The dried microporous polyolefin membrane may be cross-linked by irradiation with ionizing radiation such as alpha-rays, beta-rays, gamma-rays, or electron beams. In the case of irradiation with electron beams, the electron dose of 0.1 to 100 Mrad is preferred, and the accelerating voltage of 100 to 300 kV is preferred. The cross-linking increases the meltdown temperature of the microporous membrane.

(13) Hydrophilization

The dried microporous polyolefin membrane may be hydrophilized by monomer-grafting treatment, surfactant treatment, corona-discharging treatment, plasma treatment, or other treatments using a known method.

According to this process, a microporous polyolefin membrane is provided having high physical stability before the start of a shutdown, a high rate of air resistance change after the start of a shutdown, which is an indicator of shutdown speed, excellent heat shrinkage resistance in a temperature range from a shutdown start temperature to a shutdown temperature, a low shutdown temperature, and furthermore, excellent electrode adhesion.

(14) Surface coating

Coating the surface of the dried microporous polyolefin membrane with a porous fluororesin such as polyvinylidene fluoride or polytetrafluoroethylene, porous polyimide, or porous polyphenylene sulfide improves the meltdown properties of a battery separator. On at least one side of the dried microporous polyolefin membrane, a coating layer comprising polypropylene may be formed. Examples of the polypropylene for coating include the polypropylene disclosed in WO2005/054350.

[3] Modifying porous layer

The modifying porous layer used in the present invention will now be described. The modifying porous layer in the present invention may be any layer containing a resin that provides or improves at least one function such as heat resistance, adhesion to electrode material, or electrolyte permeability, and the modifying porous layer preferably contains an inorganic particle or cross-linked polymer particle in addition to the functional resin.

To improve the heat resistance, for example, the functional resin used is preferably a heat resistant resin having a glass transition temperature or melting point of preferably 150°C or higher, more preferably 180°C or higher, and most preferably 210°C or higher. There is no need to set the upper limit on the glass transition temperature or melting point. When the glass transition temperature is higher than a decomposition temperature, the decomposition temperature is preferably in the range described above. A glass transition temperature in this preferred range provides a sufficient thermal-rupture-resistant temperature, which can ensure a high level of safety.

Specifically, from the standpoint of heat resistance and electrode adhesion, it is preferable to use at least one selected from the group consisting of vinylidene fluoride homopolymer, vinylidene fluoride/fluorinated olefin copolymer, vinyl fluoride homopolymer, and vinyl fluoride/fluorinated olefin copolymer. Polyvinylidene fluoride resins are particularly preferred. These polymers have electrode adhesion, high affinity for nonaqueous electrolyte solution, proper heat resistance, and high chemical and physical stability to nonaqueous electrolyte solution, and therefore can maintain the affinity for electrolyte solution sufficiently even when used at a high temperature.

The polyvinylidene fluoride resin used may be a commercially available resin. Examples thereof include "KF polymer" (registered trademark) #1100, "KF polymer" (registered trademark) #1120, "KF polymer" (registered trademark) W#1700, "KF polymer" (registered trademark) #8500 (which are available from Kureha Chemical Industry Co., Ltd.), "Hylar" (registered trademark) 301F PVDF, "Hylar" (registered trademark) 460, "Hylar" (registered trademark) 5000 PVDF (which are available from Solvay Specialty Polymers Japan), and "KYNAR" (registered trademark) 761, "KYNAR FLEX" (registered trademark) 2800, "KYNAR FLEX" (registered trademark) 2850, "KYNAR FLEX" (registered trademark) 2851 (which are available from ARKEMA).

From the standpoint of pore formation, improved heat resistance, and reduced curling, it is preferable to add an inorganic particle or cross-linked polymer particle to the modifying porous layer of the present invention. Furthermore, adding an inorganic particle or cross-linked polymer particle can produce effects such as prevention of internal short circuit due to the growth of dendrites on an electrode inside a battery (dendrite-preventing effect) and impartment of slip characteristics. The upper limit of the amount of these particles is preferably 98% by weight, more preferably 95% by weight, based on the total amount of the modifying porous layer. The lower limit is preferably 30% by weight, more preferably 40% by weight. When the amount of these particles is in this preferred range, the curling-reducing effect and the dendrite-preventing effect produced are sufficient; besides, the percentage of the functional resin relative to the total volume of the modifying porous layer is sufficient, which leads to sufficient adhesion to electrodes.

Examples of inorganic particles include calcium carbonate, calcium phosphate, amorphous silica, crystalline glass filler, kaolin, talc, titanium dioxide, alumina, silica-alumina composite oxide particles, barium sulfate, calcium fluoride, lithium fluoride, zeolite, molybdenum sulfide, and mica.

Examples of cross-linked polymer particles include cross-linked polystyrene particles, cross-linked acrylic resin particles, and cross-linked methyl methacrylate particles. The average diameter of such particles is preferably 1.5 times to 50 times, more preferably 2.0 times to 20 times the average pore size of the microporous polyolefin membrane. When the average diameter of the particles is in this preferred range, the particles, even if mixed with a heat-resistant resin, are unlikely to block the pores of the microporous polyolefin membrane, and there is no danger of causing significant increase in air resistance; besides, the particles will not fall off during a battery assembly process, and serious defects in a battery will not be caused.

The shape of the particles may be spherical, substantially spherical, plate-like, or needle-like, but is not limited thereto.

The thickness of the modifying porous layer is preferably 1 to 5 $\mu$m, more preferably 1 to 4 $\mu$m, and most preferably 1 to 3 $\mu$m. When the thickness is in this preferred range, sufficient adhesion to electrodes is provided, and the membrane strength and insulation properties of the microporous polyolefin membrane can be ensured when it melts and shrinks at or higher than its melting point; besides, the moderate percentage of the microporous polyolefin membrane provides a sufficient pore-blocking function, and an abnormal reaction can be prevented. In addition, the size when taken up will not be too large, which allows adaptation to the increase in battery capacity which is expected to progress in the future. Furthermore, curling is unlikely to increase, which can improve the productivity in a battery assembly process.

The porosity of the modifying porous layer is preferably 30 to 90%, more preferably 40 to 70%. When the porosity is in this preferred range, the electrical resistance of the membrane will not be too high, and it is easy to apply a high current; besides, the membrane strength can be maintained at a high level.

The upper limit of the total thickness of a battery separator obtained by laminating the modifying porous layer is preferably 25 $\mu$m, more preferably 20 $\mu$m. The lower limit is preferably not less than 7 $\mu$m, more preferably not less than 8 $\mu$m. When the total thickness of the battery separator is in this preferred range, a sufficient mechanical strength and sufficient insulation properties can be ensured; besides, the area of electrodes that can be loaded into a container will not be reduced excessively, and the decrease in capacity can be avoided.

[4] Process for laminating modifying porous layer

The process for laminating the modifying porous layer in the battery separator of the present invention will now be described. In the present invention, the process for laminating the modifying porous layer comprises the steps of (i) to (iv):

(i) Applying a varnish to the microporous polyolefin membrane obtained above, the varnish comprising a fluorine resin and an inorganic particle or cross-linked polymer particle, wherein the fluorine resin concentration in solution components excluding the inorganic particle or cross-linked polymer particle is 0.5% by weight to 2.5% by weight;
(ii) Passing the microporous polyolefin membrane coated with the varnish through a low humidity zone having an absolute humidity of less than 6 g/m$^3$;
(iii) Passing the microporous polyolefin membrane passed through the low humidity zone through a high humidity zone having an absolute humidity of 6 g/m$^3$ or more; and

(iv) Immersing the microporous polyolefin membrane passed through the high humidity zone in a coagulation bath to convert the membrane comprising the fluorine resin into a modifying porous layer, followed by washing and drying, to obtain a battery separator.

In the step (ii), by passing the microporous polyolefin membrane coated with the varnish through the low humidity zone having an absolute humidity of less than 6 g/m$^3$, the fluorine resin penetrates into the pores of the microporous polyolefin membrane. In the step (iii), by passing the microporous polyolefin membrane passed through the low humidity zone through the high humidity zone having an absolute humidity of 6 g/m$^3$, the fluorine resin and the varnish solvent dissolving the fluorine resin are phase-separated, and at the same time, gelation (de-fluidization) occurs.

A description will be given in more detail. The modifying porous layer is obtained by laminating a varnish composed mainly of a fluorine resin solution and an inorganic particle or cross-linked polymer particle, the fluorine resin solution being obtained by dissolution in a solvent that is able to dissolve a fluorine resin and miscible with water, to the microporous polyolefin membrane obtained above using a coating method, placing the laminate in a certain humidity environment to cause phase separation between the fluorine resin and the solvent miscible with water, and placing the laminate into a water bath (coagulation bath) to coagulate the fluorine resin.

For the resin concentration in solution components excluding the inorganic particle or cross-linked polymer particle in the varnish, the upper limit is 2.5% by weight, preferably 2.0% by weight, and more preferably 1.5% by weight. The lower limit is 0.5% by weight, preferably 1.0% by weight. If the resin concentration in the solution components is less than 0.5% by weight, since the amount of the resin that penetrates into the pores of the microporous polyolefin membrane is small, absT(1200) may be less than 0.01, and sufficient adhesion may not be provided. In addition, coating can be difficult because of an increased amount of wet coating. Furthermore, since the resin is less likely to reach the vicinity of the microporous polyolefin membrane surface opposite to the surface on which the modifying porous layer is laminated, absR(1200) may be less than 0.001, and sufficient electrolyte permeability may not be provided.

If the resin concentration is over 2.5% by weight, since the amount of the resin that penetrates into the pores of the microporous polyolefin membrane is large, absT(1200) and absR(1200) maybe more than 0.30 and 0.030, respectively, and the amount of the fluorine resin that penetrates into the pores of the modifying porous layer is large, which may result in an increased rate of air resistance increase.

The low humidity zone in the present invention has an absolute humidity of less than 6 g/m$^3$, preferably less than 4 g/m$^3$, and more preferably less than 3 g/m$^3$. If the absolute humidity in the low humidity zone is not less than 6 g/m$^3$, the fluorine resin constituting the modifying porous layer starts to gel in parallel with phase separation; consequently, the fluorine resin component constituting the modifying porous layer does not penetrate into the pores of the microporous polyolefin membrane sufficiently, and the modifying porous layer is not provided with sufficient adhesion. The lower limit of the absolute humidity, though not specifically defined, need only be at least 0.5 g/m$^3$. The time of passage through the low humidity zone is preferably at least 3 seconds to infiltrate the fluorine resin component. The upper limit of the time of passage through the low humidity zone is not specifically defined, and 20 seconds is sufficient.

The microporous polyolefin membrane passed through the low humidity zone is then passed through the high humidity zone. The time of passage through the high humidity zone is preferably at least 3 seconds. The upper limit of the time of passage through the high humidity zone is not specifically defined, and 10 seconds is sufficient. For the high humidity zone in the present invention, the lower limit of the absolute humidity is 6 g/m$^3$, preferably not less than 7 g/m$^3$, and more preferably not less than 8 g/m$^3$, and the upper limit, though not specifically defined, need only be not more than 25 g/m$^3$. If the absolute humidity of the high humidity zone is less than 6 g/m$^3$, phase separation does not proceed sufficiently, and consequently a thin nonporous layer may be formed on the modifying porous layer surface to significantly increase the air permeability. For both the low humidity zone and the high humidity zone, temperature conditions are not critical as long as the absolute humidity is in the ranges described above, but a preferred range is 20°C to 50°C from the standpoint of energy saving.

In the present invention, from the standpoint of sufficient adhesion between the microporous polyolefin membrane and the modifying porous layer, the peeling strength between the microporous polyolefin membrane and the modifying porous layer is preferably at least 1.0 N/25 mm, more preferably at least 1.5 N/25 mm, and still more preferably at least 2.0 N/25 mm. In this preferred range, the modifying porous layer will not be peeled off during high-speed processing in the battery assembly process described above.

In the coagulation bath, the fluorine resin component coagulates into a three-dimensional network. The immersion time in the coagulation bath is preferably at least 3 seconds. In this preferred range, the resin component coagulates sufficiently. The upper limit is not restricted, and 10 seconds is sufficient. Furthermore, the unwashed microporous membrane described above is immersed in an aqueous solution containing good solvent for the fluorine resin constituting the modifying porous layer in an amount of 1 to 20% by weight, more preferably 5 to 15% by weight, washed with pure water, and dried with hot air at 100°C or lower, whereby a final battery separator can be obtained.

According to the above process, the resin finely enters deep into the pores of the microporous polyolefin membrane, which can reduce the increase in shutdown temperature of the microporous polyolefin membrane, and further provide sufficient electrolyte permeability. In other words, by applying a varnish in which the resin concentration in solution components excluding the inorganic particle or cross-linked polymer particle is in the specific range described above to the microporous polyolefin membrane having specific properties, and treating the coated microporous polyolefin membrane in the humidity environment described above, the modifying porous layer can be provided with adhesion, and the increase in shutdown temperature can be reduced.

For the washing for removing the solvent, common methods such as warming, ultrasonic irradiation, and bubbling can be used. Furthermore, to keep constant the concentration in each bath and increase washing efficiency, removing the solution inside the microporous membrane between the baths is effective. Specifically, for example, the solution can be removed by extruding the solution inside the porous layer with air or inert gas, or squeezing out the solution inside the membrane physically with a guide roll.

Examples of the method of applying the varnish include reverse roll coating, gravure coating, kiss coating, roll brushing, spray coating, air knife coating, meyer bar coating, pipe doctor method, blade coating, and die coating, and these methods can be used alone or in combination. It is important that the varnish be hermetically stored until application so as not to be exposed to the outside air.

The battery separator of the present invention is desirably stored dry, but when it is difficult to store it absolutely dry, it is preferable to perform a vacuum drying treatment at 100°C or lower immediately before use.

The battery separator of the present invention can be used as a separator for batteries such as secondary batteries such as nickel-hydrogen batteries, nickelcadmium batteries, nickel-zinc batteries, silver-zinc batteries, lithium ion secondary batteries, and lithium polymer secondary batteries, and is preferably used particularly as a separator for lithium ion secondary batteries.

[5] Physical properties of microporous polyolefin membrane

The microporous polyolefin membrane used in the present invention has the following physical properties.

(1) Shutdown temperature

The shutdown temperature of the microporous polyolefin membrane used in the present invention is 135°C or lower. A shutdown temperature of higher than 135°C can result in low overheat shutdown response when a modifying porous layer is laminated to the microporous polyolefin membrane.

(2) Rate of air resistance change (indicator of shutdown speed)

The rate of air resistance change after the start of a shutdown of the microporous polyolefin membrane used in the present invention is at least $1 \times 10^4$ sec/100 cc/°C. A rate of air resistance change less than $1 \times 10^4$ sec/100 cc/°C leads to an increased shutdown temperature when a modifying porous layer is laminated to the microporous polyolefin membrane. The rate of air resistance change is more preferably $1.2 \times 10^4$ sec/100 cc/°C or more.

(3) Shrinkage rate at 130°C

The transverse shrinkage rate at 130°C (measured by thermomechanical analysis under a load of 2 gf at a temperature rising rate of 5°C/min) of the microporous polyolefin membrane used in the present invention is preferably 20% or less. A shrinkage rate at 130°C of more than 20% significantly decreases the heat resistance of a battery separator when a modifying porous layer is laminated to the microporous polyolefin membrane. The heat shrinkage rate is preferably 17% or less.

The microporous polyolefin membrane according to preferred embodiments of the present invention also has the following physical properties.

(4) Thickness of microporous polyolefin membrane

The thickness of the microporous polyolefin membrane used in the present invention is 16 $\mu$m or less. The preferred upper limit is 12 $\mu$m, more preferably 10 $\mu$m. The lower limit is 5 $\mu$m, preferably 6 $\mu$m. When the thickness is less than 5 $\mu$m, membrane strength and pore-blocking function of practical use may not be provided. When the thickness is more than 16 $\mu$m, the area per unit volume of a battery case is significantly restricted, which is not suitable for the increase in capacity of a battery which is expected to progress in the future.

(5) Air resistance

For the air resistance of the microporous polyolefin membrane used in the present invention, the upper limit is preferably 300 sec/100 cc Air, more preferably 200 sec/100 cc Air, and still more preferably 150 sec/100 cc Air, and the lower limit is 50 sec/100 cc Air, preferably 70 sec/100 cc Air, and more preferably 100 sec/100 cc Air.

(6) Porosity

For the porosity of the microporous polyolefin membrane used in the present invention, the upper limit is preferably 70%, more preferably 60%, and still more preferably 55%. The lower limit is preferably 30%, more preferably 35%, and still more preferably 40%. An air resistance of higher than 300 sec/100 cc Air and a porosity of lower than 30% are both not sufficient for sufficient charge and discharge properties, particularly, ion permeability (charge and discharge operating voltage) of a battery and for the lifetime of a battery (closely related to the amount of electrolytic solution retained), and when these limits are exceeded, it is likely that functions of a battery cannot be fully exerted. Furthermore, in both cases where the air resistance is lower than 50 sec/100 cc Air and where the porosity is higher than 70%, sufficient mechanical strength and insulation properties are not provided, and it is highly likely that a short circuit occurs during charge and discharge.

(7) Pin puncture strength

The pin puncture strength of the microporous polyolefin membrane used in the present invention is preferably at least 4,000 mN/20 $\mu$m. When the pin puncture strength is in this preferred range, there is no risk of causing a short circuit between electrodes when the microporous polyolefin membrane is introduced into a battery as a separator. The pin puncture strength is more preferably 4,500 mN/20 $\mu$m or more.

(8) Tensile rupture strength

The tensile rupture strength of the microporous polyolefin membrane used in the present invention is preferably 80,000 kPa or more in both MD and TD. When the tensile rupture strength is 80,000 kPa or more, the membrane will not rupture when used as a battery separator. The tensile rupture strength is more preferably 100,000 kPa or more.

(9) Tensile rupture elongation

The tensile rupture elongation of the microporous polyolefin membrane used in the present invention is preferably 100% or more in both MD and TD. When the tensile rupture elongation is 100% or more, the membrane will not rupture when used as a battery separator.

(10) Shutdown start temperature

The shutdown start temperature of the microporous polyolefin membrane used in the present invention is preferably not higher than 130°C. When the shutdown start temperature is higher than 130°C, the microporous polyolefin membrane will show a low overheat shutdown response when used as a lithium battery separator.

(11) Meltdown temperature

The meltdown temperature of the microporous polyolefin membrane used in the present invention is preferably 150°C or higher. The meltdown temperature of a battery separator is preferably 200°C or higher. In this preferred range, excellent rupture resistance during the temperature rising after shutdown is provided.

(12) Average pore size

The average pore size of the microporous polyolefin membrane used in the present invention, which has a great influence on properties such as shutdown properties, is preferably 0.05 to 0.30 $\mu$m, more preferably 0.07 to 0.50 $\mu$m, and still more preferably 0.08 to 0.13 $\mu$m. When the average pore size of the microporous polyolefin membrane is in this preferred range, the fluorine resin easily penetrates into the pores of the microporous polyolefin membrane, which provides sufficient adhesion to the modifying porous layer and high electrolyte permeability as well as high shutdown properties.
The microporous polyolefin membrane used in the present invention has an excellent balance of shutdown properties, heat shrinkage resistance in a temperature range from a shutdown start temperature to a shutdown temperature, and meltdown properties, and also is excellent in permeability and mechanical properties.

Examples

The present invention will now be described in detail with reference to examples, but these examples are not intended to limit the present invention. The measurements in the examples are values determined by the following methods.

(1) Average thickness

For a microporous polyolefin membrane and a battery separator, their thicknesses were measured each at 10 randomly selected points using a contact thickness meter, and its average value was used as an average thickness ($\mu$m).

(2) Air resistance

Using an Oken-type air resistance meter (manufactured by Asahi Seiko Co., Ltd., EGO-1T), samples of a microporous polyolefin membrane and a battery separator were each fixed such that wrinkling did not occur, and its air resistance was measured in accordance with JIS P 8117. The sample was 10-cm square, and measuring points were the center and four corners, five points in total, of the sample. Its average value was used as an air resistance p (sec/100 cc Air).
When the length of a side of the sample is less than 10 cm, measurements at five points at intervals of 5 cm may be used. The rate of air resistance increase was determined by dividing the air resistance of the battery separator by the air resistance of the microporous polyolefin membrane and expressed as %.

(3) Pin puncture strength of microporous polyolefin membrane

A microporous membrane having a thickness $T_1$ ($\mu$m) was pricked at a rate of 2 mm/sec with a needle 1 mm in diameter with a spherical end (radius R of curvature: 0.5 mm), and the maximum load at this time was measured. The measured maximum load La was converted to a maximum load Lb at a thickness of 20 $\mu$m by the equation: Lb = (La $\times$ 20)/$T_1$, and the converted value was used as a pin puncture strength (mN/20 $\mu$m).

(4) Tensile rupture strength and tensile rupture elongation of microporous polyolefin membrane

Measurements were made using a strip test piece with a width of 10 mm according to ASTM D882.

(5) Shutdown temperature $T_{SD}$ of microporous polyolefin membrane and battery separator

For a shutdown temperature $T_{SD}$ (°C), the air resistance of a microporous polyolefin membrane was measured using an Oken-type air resistance meter (manufactured by Asahi Seiko Co., Ltd., EGO-1T) while heating the microporous polyolefin membrane at a temperature rising rate of 5°C/min, and the temperature at which the air resistance reached $1 \times 10^5$ sec/100 cc, a detection limit, was determined and used as a shutdown temperature T (°C). The difference between the shutdown temperature of a microporous polyolefin membrane and the shutdown temperature of a battery separator is preferably 2.5°C or less, more preferably 2.0°C or less, and most preferably 1.0°C or less.

(6) Shutdown start temperature $T_S$

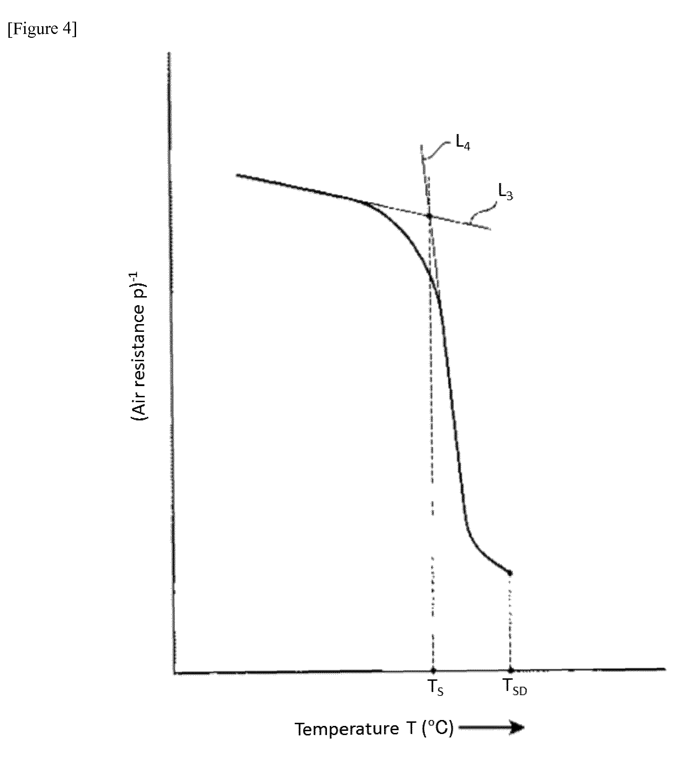

The data of the air resistance p (sec/100 cc Air) at a temperature T (°C), which was obtained in the above shutdown temperature measurement, was used to generate a curve (shown in FIG. 4) representing the relation of a reciprocal of the air resistance p to a temperature, and the intersection of an extension $L_3$ of the straight portion from the start of a temperature rise (room temperature) to the start of a shutdown and an extension $L_4$ of the straight portion from after the start of a shutdown until reaching the shutdown temperature $T_{SD}$ (°C) was used as a shutdown start temperature $T_S$ (°C).

(7) Rate of air resistance change (shutdown speed)

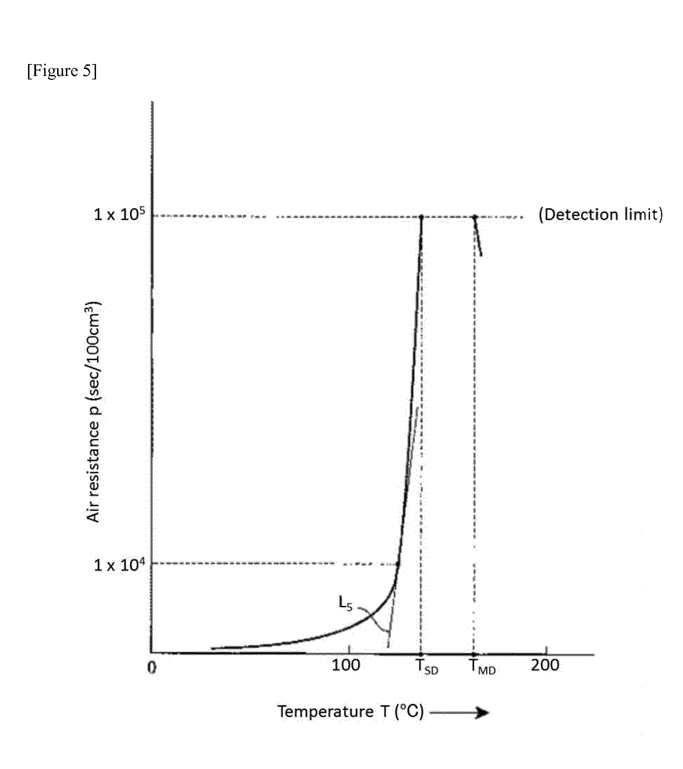

The data of the air resistance p at a temperature T, which was obtained in the above shutdown temperature measurement, was used to generate a temperature-air resistance curve (shown in FIG. 5), and the gradient of the curve

($\Delta p/\Delta T$, inclination of a tangent $L_5$ shown in FIG. 5) at a temperature at which the air resistance reached $1 \times 10^4$ sec/100 cc was determined and used as a rate of air resistance change (shutdown speed).

(8) Shrinkage rate at 130°C

Using a thermomechanical analyzer (manufactured by Seiko Instruments, Inc., TMA/SS6000), a test piece of 10 mm (TD) $\times$ 3 mm (MD) was heated from room temperature at a rate of 5°C/min while drawing the test piece in the longitudinal direction under a load of 2 g, and the rate of dimensional change from the size at 23°C was measured three times at 130°C. The measurements were averaged to determine the shrinkage rate.

(9) Meltdown temperature $T_{MD}$ of microporous polyolefin membrane and battery separator

After the above shutdown temperature $T_{SD}$ was reached, heating was further continued at a temperature rising rate of 5°C/min, and the temperature at which the air resistance became $1 \times 10^5$ sec/100 cc again was determined and used as a meltdown temperature $T_{MD}$ (°C) (see FIG. 5).

(10) Measurement of absT(1200)

For battery separators obtained in Examples and Comparative Examples, a modifying porous layer was completely peeled off with adhesive tape to prepare a sample. The sample prepared was examined for its infrared absorption spectrum by the transmission method under the following conditions. Also for an uncoated microporous polyolefin membrane used as a blank sample, its infrared absorption spectrum was measured in a similar manner. The absorbance at or near 1,200 cm$^{-1}$ (absT(1200)) derived from a fluorine resin component was determined by determining the value of an absorption peak height having an absorption maximum in the area within 1,200 $\pm$ 20 cm$^{-1}$ and converting the value to an absorbance per 10 $\mu$m of the microporous polyolefin membrane. The line between tails on both sides of the maximum absorption peak was used as a baseline. When there was large noise, smoothing was performed. All the blank samples (uncoated microporous polyolefin membrane) were confirmed in advance not to have an absorption having a maximum in the above area.

Measurement conditions

Apparatus: Fourier transform infrared spectrophotometer FT-720 manufactured by Horiba, Ltd.
Detector: DLATGS
Resolution: 4 cm$^{-1}$
Accumulations: 100 times

(11) Measurement of absR(1200)

For battery separators obtained in Examples and Comparative Examples, the infrared absorption spectrum was obtained using the same apparatus and measuring method as used in (1) Measurement of absT(1200) above except that the uncoated surface was examined for its infrared absorption spectrum using the reflection method. The absorbance at or near 1,200 cm$^{-1}$ (absR(1200)) derived from a fluorine resin component was determined from the value of an absorption peak height having an absorption maximum in the area within 1,200 $\pm$ 20 cm$^{-1}$.

(12) Heat resistance of battery separator

The heat resistances of a microporous polyolefin membrane and a battery separator were each determined from the average value of the rate of change from the initial size in MD and TD after storage in an oven at 130°C for 60 minutes.

(13) Electrode adhesion

A negative electrode and a battery separator were each cut out to a size of 2 cm $\times$ 5 cm, and the active material side of the negative electrode and the modifying porous layer side of the battery separator were laminated to each other. The laminate was pressed at a pressure of 2 MPa for 3 minutes while maintaining the temperature of the interface at 50°C. Thereafter, the negative electrode and the battery separator were peeled off, and the peeled interface was observed and evaluated according to the following criteria. The negative electrode used was a coated electrode A100 (1.6 mAh/cm$^2$) available from PIOTREK.

Good: Negative electrode active material is attached to a modifying porous layer of a battery separator in the area of 50% or more

Poor: Negative electrode active material is attached to a modifying porous layer of a battery separator in the area of less than 50%

(14) Adhesion between modifying porous layer and microporous polyolefin membrane

To a modifying porous layer side of each of the separators obtained in Examples and Comparative Examples, adhesive tape (available from Nichiban Co., Ltd., No. 405: 24 mm wide) was applied and cut to 24 mm in width and 150 mm in length to prepare a test sample. The peeling strength at the interface between a modifying porous layer and a microporous polyolefin membrane was measured by the peeling method (peel rate: 500 mm/min, T-peel) under the conditions of 23°C and 50% RH using a tensile tester ("Tensilon" (registered trademark) RTM-100 manufactured by A & D Company, Limited). Measurements were made over time within 100 mm from the start to the end of the measurements, and the average value of the measurements was calculated and converted to a value per 25 mm width, which was used as a peeling strength. At the peeled interface, the modifying porous layer surface can remain on the microporous polyolefin membrane side, but also in this case, the calculated value was used as a peeling strength between the modifying porous layer and the microporous polyolefin membrane.

(15) Electrolyte permeability

White paper (PPC type H (available from Itochu Pulp & Corporation)) is placed on a horizontally-disposed smooth glass plate, and the battery separators obtained in Examples or Comparative Examples were each laminated thereon with a microporous membrane B facing downward. Thereafter, 100 µL of a polycarbonate reagent was added dropwise from above (from a microporous membrane A side) such that the drops were shaped into a substantial circle. After 3 seconds from the addition, the battery separator was peeled off the white paper, and the size (major axis) of a spot due to the polycarbonate reagent permeated into the white paper was read. This procedure was repeated three times, and an average value (BL) was calculated. Also for the microporous membrane A alone, measurements were made similarly (AL). Electrolyte permeability (L) was determined from BL - AL.

Higher values mean more excellent electrolyte permeability, and evaluation was made according to the following criteria.

Evaluation criteria

L ≥ 5 mm Excellent
5 mm > L ≥ 3 mm Good
3 mm > L ≥ 0 mm Poor

Example 1

One hundred parts by mass of a polyethylene (PE) composition comprising 30% by mass of an ultra-high molecular weight polyethylene (UHMWPE) having a mass average molecular weight (Mw) of $2.5 \times 10^6$ and 70% by mass of a high density polyethylene (HDPE) having a Mw of $2.8 \times 10^5$ was dry-blended with 0.375 parts by mass of tetrakis[methylene-3-(3,5-ditertiarybutyl-4-hydroxyphenyl)-propionate]methane to obtain a mixture. The PE composition comprising the UHMWPE and the HDPE had a ΔHm (≤ 125°C) of 11%, a T (50%) of 134.7°C, and a crystal temperature of 100°C.

The Mws of the UHMWPE and the HDPE were determined by gel permeation chromatography (GPC) under the following conditions, and so on.

- Measuring apparatus: GPC-150C available from Waters Corporation
- Column: "Shodex" (registered trademark) UT806M available from Showa Denko K.K.
- Column temperature: 135°C
- Solvent (mobile phase): o-dichlorobenzene
- Solvent flow rate: 1.0 mL/min
- Sample concentration: 0.1% by mass (dissolution conditions: 135°C/h)

- Injection amount: 500 $\mu$L
- Detector: Differential refractometer available from Waters Corporation
- Calibration curve: Generated from a calibration curve of a monodisperse polystyrene standard sample using a predetermined conversion constant.

Twenty-five parts by mass of the mixture obtained was loaded into a strong-blending twin-screw extruder (feed rate Q of the polyethylene composition: 54 kg/h). Seventy-five parts by mass of liquid paraffin was fed to the twin-screw extruder via a side feeder, and melt-blended at a temperature of 210°C while keeping the screw speed Ns at 180 rpm (Q/Ns: 0.3 kg/h/rpm) to prepare a polyethylene solution.

The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched 5X at a rate of 20%/sec in both MD and TD with a batch-type stretching machine at 116°C. The gel-like sheet was then re-stretched in TD at 127°C at a stretching magnification of 1.4X to obtain a gel-like sheet. This gel-like sheet was fixed to a frame plate (size: 30 cm × 30 cm, made of aluminum) and immersed in a washing bath of methylene chloride controlled at 25°C, and washed while being swayed at 100 rpm for 3 minutes to remove the liquid paraffin. The washed membrane was air-dried at room temperature, fixed to a tenter, and heat-set at 127°C for 10 minutes to produce a microporous polyolefin membrane (a) having a thickness of 9 $\mu$m.

Preparing varnish

As a fluorine resin solution, "KF polymer" (registered trademark) #1120 (polyvinylidene fluoride resin solution (melting point: 175°C, 12% *N*-methylpyrrolidone solution) available from Kureha Corporation) was used. The polyvinylidene fluoride resin solution, alumina particles having an average diameter of 0.5 $\mu$m, and *N*-methyl-2-pyrrolidone were mixed at a weight ratio of 14:19:67, and the resulting mixture was placed into a polypropylene container together with zirconium oxide beads ("Torayceram" (registered trademark) beads available from Toray Industries, Inc., diameter: 0.5 mm) and dispersed for 6 hours using a paint shaker (manufactured by Toyo Seiki Seisaku-Sho, Ltd.). The dispersion was then filtered through a filter with a filtration limit of 5 $\mu$m to prepare a varnish (a). The fluororesin concentration in the solution components was 2.1 %, and the weight ratio of the fluororesin (solid component) to the particles was 8:92. The varnish was hermetically stored until application so as not to be exposed to the outside air.

Laminating modifying porous layer

The microporous polyolefin membrane (a) was coated on one side with the varnish (a) by gravure coating, and passed through a low humidity zone at a temperature of 25°C and an absolute humidity of 1.8 g/m$^3$ for 8 seconds, then through a high humidity zone at a temperature of 25°C and an absolute humidity of 12 g/m$^3$ for 5 seconds. The coated microporous polyolefin membrane (a) was then placed into an aqueous solution (coagulation bath) containing 5% by weight of *N*-methyl-2-pyrrolidone, washed with pure water, and then dried by being passed through a hot-air drying furnace at 70°C to obtain a battery separator with a final thickness of 11 $\mu$m.

Example 2

One hundred parts by mass of a polyethylene (PE) composition comprising 30% by mass of an ultra-high molecular weight polyethylene (UHMWPE) having a mass average molecular weight (Mw) of $2.5 \times 10^6$ and 70% by mass of a high density polyethylene (HDPE) having a Mw of $3.0 \times 10^5$ was dry-blended with 0.375 parts by mass of tetrakis[methylene-3-(3,5-ditertiarybutyl-4-hydroxyphenyl)-propionate]methane to obtain a mixture. The PE composition comprising the UHMWPE and the HDPE had a $\Delta$Hm ($\leq$ 125°C) of 14% and a T (50%) of 132.5°C.

Twenty-five parts by mass of the mixture obtained was loaded into a strong-blending twin-screw extruder (feed rate Q of the polyethylene composition: 120 kg/h). Seventy-five parts by mass of liquid paraffin was fed to the twin-screw extruder via a side feeder, and melt-blended at a temperature of 210°C while keeping the screw speed Ns at 400 rpm (Q/Ns: 0.3 kg/h/rpm) to prepare a polyethylene solution.

The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched 5X at a rate of 20%/sec in both MD and TD with a batch-type stretching machine at 114°C to obtain a gel-like sheet. This gel-like sheet was fixed to a frame plate (size: 30 cm × 30 cm, made of aluminum) and immersed in a washing bath of methylene chloride controlled at 25°C, and washed while being swayed at 100 rpm for 3 minutes to remove the liquid paraffin. The washed membrane was air-dried at room temperature, fixed to a tenter, and heat-set at 126°C for 10 minutes to produce a microporous polyolefin membrane (b) having a thickness of 16 $\mu$m. On one side of the microporous polyolefin membrane (b), a modifying porous layer was laminated in the same manner as in Example 1 to obtain a battery separator with a final thickness of 18 $\mu$m.

Example 3

One hundred parts by mass of a polyethylene (PE) composition comprising 20% by mass of an ultra-high molecular weight polyethylene (UHMWPE) having a mass average molecular weight (Mw) of $2.5 \times 10^6$ and 80% by mass of a high density polyethylene (HDPE) having a Mw of $3.0 \times 10^5$ was dry-blended with 0.375 parts by mass of tetrakis[methylene-3-(3,5-ditertiarybutyl-4-hydroxyphenyl)-propionate]methane to obtain a mixture. The PE composition comprising the UHMWPE and the HDPE had a $\Delta$Hm ($\leq$ 125°C) of 16% and a T (50%) of 132.9°C.

Twenty-five parts by mass of the mixture obtained was loaded into a strong-blending twin-screw extruder (feed rate Q of the polyethylene composition: 72 kg/h). Seventy-five parts by mass of liquid paraffin was fed to the twin-screw extruder via a side feeder, and melt-blended at a temperature of 210°C while keeping the screw speed Ns at 240 rpm (Q/Ns: 0.3 kg/h/rpm) to prepare a polyethylene solution.

The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched 5X at a rate of 20%/sec in both MD and TD with a batch-type stretching machine at 118°C to obtain a gel-like sheet. This gel-like sheet was fixed to a frame plate (size: 30 cm $\times$ 30 cm, made of aluminum) and immersed in a washing bath of methylene chloride controlled at 25°C, and washed while being swayed at 100 rpm for 3 minutes to remove the liquid paraffin. The washed membrane was air-dried at room temperature, fixed to a tenter, and heat-set at 119°C for 10 minutes to produce a microporous polyolefin membrane (c) having a thickness of 12 $\mu$m. A battery separator with a final thickness of 14 $\mu$m was obtained in the same manner as in Example 1 except that a modifying porous layer was laminated on one side of the microporous polyolefin membrane (c).

Example 4

A battery separator was obtained in the same manner as in Example 1 except that the mixing ratio of the fluororesin solution to alumina particles to N-methyl-2-pyrrolidone was 16:19:65 (varnish (b)). The concentration of the fluorine resin in the solution components was 2.4%, and the weight ratio of the fluorine resin (solid component) to the particles was 9:91.

Example 5

A battery separator was obtained in the same manner as in Example 1 except that the mixing ratio of the fluororesin solution to alumina particles to N-methyl-2-pyrrolidone was 10:14:76 (varnish (c)). The concentration of the fluorine resin in the solution components was 1.4%, and the weight ratio of the fluorine resin (solid component) to the particles was 8:92.

Example 6

A battery separator was obtained in the same manner as in Example 1 except that the absolute humidity in the low humidity zone was 4.0 g/m$^3$.

Example 7

A battery separator was obtained in the same manner as in Example 1 except that the absolute humidity in the low humidity zone was 5.5 g/m$^3$.

Example 8

A battery separator was obtained in the same manner as in Example 1 except that the absolute humidity of the high humidity zone was 7.0 g/m$^3$.

Example 9

A battery separator was obtained in the same manner as in Example 1 except that the absolute humidity of the high humidity zone was 16.0 g/m$^3$.

Example 10

In the formation of a microporous polyolefin membrane, the same procedure as in Example 1 was repeated to produce a microporous polyolefin membrane (d), except that a polyethylene composition with a ∆Hm ($\leq$ 125°C) of 16% and a T (50%) of 132.9°C comprising 20% by mass of an UHMWPE having a Mw of $2.5 \times 10^6$ and 80% by mass of a HDPE having a Mw of $3.0 \times 10^5$ was used, and a gel-like sheet was stretched at 114°C. On one side of the microporous polyolefin membrane (d), a modifying porous layer was laminated to obtain a battery separator.

Example 11

In the formation of a microporous polyolefin membrane, the same procedure as in Example 1 was repeated to produce a microporous polyolefin membrane (e), except that a polyethylene composition with a ∆Hm ($\leq$ 125°C) of 11% and a T (50%) of 134.7°C comprising 30% by mass of an UHMWPE having a Mw of $2.0 \times 10^6$ and 70% by mass of a HDPE having a Mw of $2.8 \times 10^5$ was used. On one side of the of the microporous polyolefin membrane (e), a modifying porous layer was laminated to obtain a battery separator.

Example 12

In the formation of a microporous polyolefin membrane, the same procedure as in Example 1 was repeated to produce a microporous polyolefin membrane (f), except that a polyethylene composition with a ∆Hm ($\leq$ 125°C) of 24% and a T (50%) of 133.5°C comprising 20% by mass of an UHMWPE having a Mw of $2.5 \times 10^6$ and 80% by mass of a HDPE having a Mw of $3.0 \times 10^5$ was used; the stretching rate was 100%, re-stretching was not carried out; and the heat-setting temperature was 120°C. On one side of the microporous polyolefin membrane (f), a modifying porous layer was laminated to obtain a battery separator.

Example 13

A battery separator was obtained in the same manner as in Example 1 except that polymethyl methacrylate cross-linked particles ("Epostar" (registered trademark) MA, type 1002, available from Nippon Shokubai Co., Ltd., average diameter: 2.5 $\mu$m) were substituted for alumina particles.

Comparative Example 1

A modifying porous layer was not laminated, and the microporous polyolefin membrane obtained in Example 1 was used as a battery separator.

Comparative Example 2

In the formation of a microporous polyolefin membrane, 100 parts by mass of a polyethylene (PE) composition comprising 30% by mass of an UHMWPE having a Mw of $2.2 \times 10^6$ and 70% by mass of a HDPE having a Mw of $3.0 \times 10^5$ was dryblended with 0.375 parts by mass of tetrakis[methylene-3-(3,5-ditertiarybutyl-4-hydroxyphenyl)-propionate]methane to obtain a mixture. The PE composition comprising the UHMWPE and the HDPE had a ∆Hm ($\leq$ 125°C) of 9% and a T (50%) of 135.9°C.
Twenty-five parts by mass of the mixture obtained was loaded into a strong-blending twin-screw extruder (feed rate Q of the polyethylene composition: 54 kg/h). Seventy-five parts by mass of liquid paraffin was fed to the twin-screw extruder via a side feeder, and melt-blended at a temperature of 210°C while keeping the screw speed Ns at 180 rpm (Q/Ns: 0.3 kg/h/rpm) to prepare a polyethylene solution.
The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched 5X at a rate of 20%/sec in both MD and TD with a batch-type stretching machine at 114°C to obtain a gel-like sheet. This gel-like sheet was fixed to a frame plate (size: 30 cm $\times$ 30 cm, made of aluminum) and immersed in a washing bath of methylene chloride controlled at 25°C, and washed while being swayed at 100 rpm for 3 minutes to remove the liquid paraffin. The washed membrane was air-dried at room temperature, fixed to a tenter, and heat-set at 126°C for 10 minutes to produce a microporous polyolefin membrane (g) having a thickness of 9 $\mu$m. On one side of the microporous polyolefin membrane (g), a modifying porous layer was laminated to obtain a battery separator.

Comparative Example 3

In the formation of a microporous polyolefin membrane, 100 parts by mass of a polyethylene (PE) composition comprising 30% by mass of an UHMWPE having a Mw of $2.2 \times 10^6$, 40% by mass of a HDPE having a Mw of $3.0 \times 10^5$, and 30% by mass of a low-molecular-weight polyethylene having a Mw of $2.0 \times 10^3$ was dryblended with 0.375 parts by mass of tetrakis[methylene-3-(3,5-ditertiarybutyl-4-hydroxyphenyl)-propionate]methane to obtain a mixture. The PE composition comprising the UHMWPE, the HDPE, and the low-molecular-weight polyethylene had a $\Delta$Hm ($\leq$ 125°C) of 26% and a T (50%) of 133.6°C.

Twenty-five parts by mass of the mixture obtained was loaded into a strong-blending twin-screw extruder (feed rate Q of the polyethylene composition: 54 kg/h). Seventy-five parts by mass of liquid paraffin was fed to the twin-screw extruder via a side feeder, and melt-blended at a temperature of 210°C while keeping the screw speed Ns at 180 rpm (Q/Ns: 0.3 kg/h/rpm) to prepare a polyethylene solution.

The polyethylene solution obtained was fed from the twin-screw extruder to a T-die, and extruded into a sheet shape. The extrudate was cooled by taking it up around a cooling roll controlled at 50°C to form a gel-like sheet. The gel-like sheet obtained was simultaneously biaxially stretched 5X at a rate of 20%/sec in both MD and TD with a batch-type stretching machine at 114°C to obtain a gel-like sheet. This gel-like sheet was fixed to a frame plate (size: 30 cm × 30 cm, made of aluminum) and immersed in a washing bath of methylene chloride controlled at 25°C, and washed while being swayed at 100 rpm for 3 minutes to remove the liquid paraffin. The washed membrane was air-dried at room temperature, fixed to a tenter, and heat-set at 118°C for 10 minutes to produce a microporous polyolefin membrane (h) having a thickness of 9 μm. On one side of the microporous polyolefin membrane (h), a modifying porous layer was laminated to obtain a battery separator.

Comparative Example 4

A battery separator was obtained in the same manner as in Example 1 except that the absolute humidity in the low humidity zone was 12.0 g/m³.

Comparative Example 5

A battery separator was obtained in the same manner as in Example 1 except that the mixing ratio of the fluororesin solution to alumina particles to *N*-methyl-2-pyrrolidone was 26:31:43 (varnish (e)). The concentration of the fluororesin in the solution components was 4.5%, and the weight ratio of the fluororesin (solid component) to the particles was 9:91.

Comparative Example 6

In the formation of a microporous polyolefin membrane, 100 parts by mass of a polyethylene (PE) composition comprising 20% by mass of an UHMWPE having a Mw of $2.5 \times 10^6$ and 80% by mass of a HDPE having a Mw of $3.0 \times 10^5$ was dryblended with 0.375 parts by mass of tetrakis[methylene-3-(3,5-ditertiarybutyl-4-hydroxyphenyl)-propionate]methane to obtain a mixture. The PE composition had a $\Delta$Hm ($\leq$ 125°C) of 21% and a T (50%) of 132.2°C.

A battery separator was obtained in the same manner as in Example 1 except that twenty-five parts by mass of the mixture obtained was loaded into a strong-blending twin-screw extruder (feed rate Q of the polyethylene composition: 54 kg/h); 75 parts by mass of liquid paraffin was fed to the twin-screw extruder via a side feeder and melt-blended at a temperature of 210°C while keeping the screw speed Ns at 720 rpm (Q/Ns: 0.075 kg/h/rpm) to prepare a polyethylene solution; a gel-like sheet was stretched at 114°C; and the heat-setting temperature was 120°C.

Comparative Example 7

A polyethylene solution was prepared in such a manner that using the same polyethylene mixture as in Comparative Example 6, the ratio of the feed rate Q of the polyethylene composition into the extruder to the screw speed Ns was 0.6, and the polyethylene resin concentration was 30% by mass. However, a homogeneous blending was not obtained.

The physical properties of the battery separators obtained in Examples 1 to 13 and Comparative Examples 1 to 7 are shown in Tables 1 and 2. The meanings of Notes (1) to (5) in Table 1 and Table 2 are described below.
Notes:

(1) Mw represents a mass average molecular weight.

(2) The percentage of the total endotherm at 125°C in the heat of crystal melting ΔHm measured by DSC. Temperature rising rate: 10°C/min.

(3) The temperature at the time when the endotherm (J/g) obtained by DSC reaches 50% of the heat of crystal melting ΔHm. Temperature rising rate: 10°C/min.

(4) Q represents a feed rate of a polyethylene composition into a twin-screw extruder, and Ns represents a screw speed.

(5) The difference between the shutdown temperature of a microporous polyolefin membrane and the shutdown temperature of a battery separator.

[Table 1]

| | | | Example 1 | Example 2 | Example 3 | Example 4 | Example 5 |
|---|---|---|---|---|---|---|---|
| Resin composition | UHMWPE | $Mw^{(1)}$ | $2.5\times10^6$ | $2.5\times10^6$ | $2.5\times10^6$ | $2.5\times10^6$ | $2.5\times10^6$ |
| | | mass % | 30 | 30 | 20 | 30 | 30 |
| | HDPE | $Mw^{(1)}$ | $2.8\times10^5$ | $3.0\times10^5$ | $3.0\times10^5$ | $2.8\times10^5$ | $2.8\times10^5$ |
| | | mass % | 70 | 70 | 80 | 70 | 70 |
| | Low molecular weight PE | $Mw^{(1)}$ | - | - | - | - | - |
| | | mass % | - | - | - | - | - |
| | $\triangle Hm\ (\leqq125°C)^{(2)}$ | % | 11 | 14 | 16 | 11 | 11 |
| | $T(50\%)^{(3)}$ | °C | 134.7 | 132.5 | 132.9 | 134.7 | 134.7 |
| Membrane-forming condition | PE solution concentration | mass % | 28 | 25 | 28 | 28 | 28 |
| | Blending condition $Q^{(4)}/Ns^{(4)}$ | kg/h/rpm | 0.3 | 0.3 | 0.3 | 0.3 | 0.3 |
| | Stretching temperature | °C | 116 | 114 | 118 | 116 | 116 |
| | Stretching magnification (MD×TD) | | 5×5 | 5×5 | 5×5 | 5×5 | 5×5 |
| | Deformation speed | %/sec | 20 | 20 | 20 | 20 | 20 |
| | Re-stretching temperature | °C | 127 | - | - | 127 | 127 |
| | Re-stretching direction | | TD | - | - | TD | TD |
| | Re-stretching magnification | | 1.4 | - | - | 1.4 | 1.4 |
| | Heat-setting treatment temperature | °C | 127 | 126 | 119 | 127 | 127 |
| | Heat-setting treatment time | min | 10 | 10 | 10 | 10 | 10 |
| | Average thickness | μm | 9 | 16 | 12 | 9 | 9 |
| | Average pore size | μm | 0.13 | 0.10 | 0.12 | 0.13 | 0.13 |
| | Air resistance | sec/100ccAir | 70 | 380 | 170 | 70 | 70 |
| | Pin puncture strength | mN/20μm | 2255 | 4951 | 2255 | 2255 | 2255 |

| | | | Example 1 | Example 2 | Example 3 | Example 4 | Example 5 |
|---|---|---|---|---|---|---|---|
| Properties of polyolefin microporous membrane | Tensile breaking strength (MD) | kPa | 118660 | 132500 | 111796 | 118660 | 118660 |
| | Tensile breaking strength (TD) | kPa | 147100 | 115840 | 78453 | 147100 | 147100 |
| | Tensile breaking elongation (MD) | % | 130 | 210 | 170 | 130 | 130 |
| | Tensile breaking elongation (TD) | % | 105 | 290 | 200 | 105 | 105 |
| | Shutdown start temperature | °C | 124.5 | 124.4 | 124.5 | 124.5 | 124.5 |
| | Shutdown speed | sec/100cc/°C | 14100 | 14000 | 14100 | 14100 | 14100 |
| | Shutdown temperature | °C | 134.7 | 133.9 | 133.7 | 134.7 | 134.7 |
| | Shrinkage ratio (TD) | % | 5 | 14 | 11 | 5 | 5 |
| | Meltdown temperature | °C | 161.9 | 162.3 | 162.1 | 161.9 | 161.9 |
| Coating process | Varnish | | a | a | a | b | c |
| | Humidifying condition (low humidity zone) | $g/m^3$ | 1.8 | 1.8 | 1.8 | 1.8 | 1.8 |
| | Humidifying condition (high humidity zone | $g/m^3$ | 12 | 12 | 12 | 12 | 12 |
| | Coating thickness | μm | 2 | 2 | 2 | 2 | 2 |
| Properties of battery separator | Average thickness | μm | 11 | 18 | 14 | 11 | 11 |
| | absT(1200) | | 0.016 | 0.031 | 0.024 | 0.023 | 0.012 |
| | absR(1200) | | 0.002 | 0.002 | 0.002 | 0.002 | 0.001 |
| | Shutdown temperature | °C | 136.1 | 134.5 | 134.9 | 136.4 | 136.5 |
| | Shutdown temperature difference[5] | °C | 1.4 | 0.6 | 1.2 | 1.7 | 1.8 |
| | Meltdown temperature | °C | >200 | >200 | >200 | >200 | >200 |
| | Heat resistance (shrinkage ratio) | % | 1.5 | 1.7 | 1.6 | 1.4 | 1.7 |
| | Electrode adhesion | | Good | Good | Good | Good | Good |
| | Adhesion between modifying porous layer and microporous polyolefin | N/25mm | 1.5 | 1.7 | 1.6 | 1.7 | 1.2 |
| | Electrolyte permeability | % | Execellent | Execellent | Execellent | Execellent | Execellent |

EP 2 958 170 A1

[Table 2]

| | | | Example 6 | Example 7 | Example 8 | Example 9 | Example 10 |
|---|---|---|---|---|---|---|---|
| Resin composition | UHMWPE | Mw[1] | $2.5\times10^6$ | $2.5\times10^6$ | $2.5\times10^6$ | $2.5\times10^6$ | $2.5\times10^6$ |
| | | mass % | 30 | 30 | 30 | 30 | 20 |
| | HDPE | Mw[1] | $2.8\times10^5$ | $2.8\times10^5$ | $2.8\times10^5$ | $2.8\times10^5$ | $3.0\times10^5$ |
| | | mass % | 70 | 70 | 70 | 70 | 80 |
| | Low molecular weight PE | Mw[1] | - | - | - | - | - |
| | | mass % | - | - | - | - | - |
| | ΔHm (≦125°C)[2] | % | 11 | 11 | 11 | 11 | 16 |
| | T(50%)[3] | °C | 134.7 | 134.7 | 134.7 | 134.7 | 132.9 |
| Membrane-forming condition | PE solution concentration | mass % | 28 | 28 | 28 | 28 | 25 |
| | Blending condition Q[4]/Ns[4] | kg/h/rpm | 0.3 | 0.3 | 0.3 | 0.3 | 0.3 |
| | Stretching temperature | °C | 116 | 116 | 116 | 116 | 114 |
| | Stretching magnification (MD×TD) | | 5×5 | 5×5 | 5×5 | 5×5 | 5×5 |
| | Deformation speed | %/sec | 20 | 20 | 20 | 20 | 20 |
| | Re-stretching temperature | °C | 127 | 127 | 127 | 127 | 127 |
| | Re-stretching direction | | TD | TD | TD | TD | TD |
| | Re-stretching magnification | | 1.4 | 1.4 | 1.4 | 1.4 | 1.4 |
| | Heat-setting treatment temperature | °C | 127 | 127 | 127 | 127 | 127 |
| | Heat-setting treatment time | min | 10 | 10 | 10 | 10 | 10 |
| | Average thickness | μm | 9 | 9 | 9 | 9 | 9 |
| | Average pore size | μm | 0.13 | 0.13 | 0.13 | 0.13 | 0.10 |
| | Air resistance | sec/100ccAir | 70 | 70 | 70 | 70 | 350 |
| | Pin puncture strength | mN/20μm | 2255 | 2255 | 2255 | 2255 | 4658 |

(continued)

| | | | Example 6 | Example 7 | Example 8 | Example 9 | Example 10 |
|---|---|---|---|---|---|---|---|
| Properties of polyolefin microporous membrane | Tensile breaking strength (MD) | kPa | 118660 | 118660 | 118660 | 118660 | 123680 |
| | Tensile breaking strength (TD) | kPa | 147100 | 147100 | 147100 | 147100 | 108000 |
| | Tensile breaking elongation (MD) | % | 130 | 130 | 130 | 130 | 230 |
| | Tensile breaking elongation (TD) | % | 105 | 105 | 105 | 105 | 310 |
| | Shutdown start temperature | °C | 124.5 | 124.5 | 124.5 | 124.5 | 124.3 |
| | Shutdown speed | sec/100cc/°C | 14100 | 14100 | 14100 | 14100 | 14700 |
| | Shutdown temperature | °C | 134.7 | 134.7 | 134.7 | 134.7 | 133.8 |
| | Shrinkage ratio (TD) | % | 5 | 5 | 5 | 5 | 12 |
| | Meltdown temperature | °C | 161.9 | 161.9 | 161.9 | 161.9 | 160.7 |
| Coating process | Varnish | | a | a | a | a | a |
| | Humidifying condition (low humidity zone) | g/m$^3$ | 4 | 5.5 | 1.8 | 1.8 | 1.8 |
| | Humidifying condition (high humidity zone) | g/m$^3$ | 12 | 12 | 7 | 16 | 12 |
| | Coating thickness | μm | 2 | 2 | 2 | 2 | 2 |
| | Average thickness | μm | 11 | 11 | 11 | 11 | 11 |
| | absT(1200) | | 0.015 | 0.014 | 0.016 | 0.017 | 0.017 |
| | absR(1200) | | 0.001 | 0.001 | 0.002 | 0.002 | 0.005 |
| | Shutdown temperature | °C | 135.7 | 135.3 | 136.1 | 136.1 | 135.2 |
| | Shutdown temperature difference [5] | °C | 1.0 | 0.6 | 1.4 | 1.4 | 1.4 |
| | Meltdown temperature | °C | >200 | >200 | >200 | >200 | >200 |
| Properties of battery separator | Heat resistance (shrinkage ratio) | % | 2.3 | 2.5 | 1.5 | 1.5 | 1.9 |
| | Electrode adhesion | | Good | Good | Good | Good | Good |
| | Adhesion between modifying porous layer and microporous polyolefin | N/25mm | 1.1 | 1.0 | 1.8 | 1.5 | 1.5 |
| | Electrolyte permeability | % | Execellent | Good | Execellent | Execellent | Execellent |

[Table 3]

| | | Units | Example 11 | Example 12 | Example 13 | Comparative Example 1 | Comparative Example 2 |
|---|---|---|---|---|---|---|---|
| Resin composition | UHMWPE | Mw[1] | $2.0\times10^6$ | $2.5\times10^6$ | $2.5\times10^6$ | $2.5\times10^6$ | $2.2\times10^6$ |
| | | mass % | 30 | 20 | 30 | 30 | 30 |
| | HDPE | Mw[1] | $2.8\times10^5$ | $3.0\times10^5$ | $2.8\times10^5$ | $2.8\times10^5$ | $3.0\times10^5$ |
| | | mass % | 70 | 80 | 70 | 70 | 70 |
| | Low molecular weight PE | Mw[1] | - | - | - | - | - |
| | | mass % | - | - | - | - | - |
| | $\Delta$Hm ($\leqq$125°C)[2] | % | 11 | 24 | 11 | 11 | 9 |
| | T(50%)[3] | °C | 134.7 | 133.5 | 134.7 | 134.7 | 135.9 |
| Membrane-forming condition | PE solution concentration | mass % | 28 | 28 | 28 | 28 | 25 |
| | Blending condition Q[4]/Ns[4] | kg/h/rpm | 0.3 | 0.3 | 0.3 | 0.3 | 0.3 |
| | Stretching temperature | °C | 116 | 116 | 116 | 116 | 114 |
| | Stretching magnification (MD×TD) | | 5x5 | 5x5 | 5x5 | 5x5 | 5x5 |
| | Deformation speed | %/sec | 20 | 100 | 20 | 20 | 20 |
| | Re-stretching temperature | °C | 127 | - | 127 | 127 | - |
| | Re-stretching direction | | TD | - | TD | TD | - |
| | Re-stretching magnification | | 1.4 | - | 1.4 | 1.4 | - |
| | Heat-setting treatment temperature | °C | 127 | 120 | 127 | 127 | 126 |
| | Heat-setting treatment time | min | 10 | 10 | 10 | 10 | 10 |
| | Average thickness | μm | 9 | 9 | 9 | 9 | 9 |
| | Average pore size | μm | 0.1 | 0.09 | 0.13 | 0.13 | 0.1 |
| | Air resistance | sec/100ccAir | 345 | 400 | 70 | 70 | 380 |
| | Pin puncture strength | mN/20μm | 5000 | 5020 | 2255 | 2255 | 4708 |

| | | | Example 11 | Example 12 | Example 13 | Comparative Example 1 | Comparative Example 2 |
|---|---|---|---|---|---|---|---|
| Properties of polyolefin microporous membrane | Tensile breaking strength(MD) | kPa | 131520 | 127600 | 118660 | 118660 | 127600 |
| | Tensile breaking strength(TD) | kPa | 117800 | 117800 | 147100 | 147100 | 113880 |
| | Tensile breaking elongation(MD) | % | 210 | 180 | 130 | 130 | 190 |
| | Tensile breaking elongation(TD) | % | 280 | 250 | 105 | 105 | 230 |
| | Shutdown start temperature | °C | 125.2 | 123.9 | 124.5 | 124.5 | 126.8 |
| | Shutdown speed | sec/100cc/°C | 19800 | 14000 | 14100 | 14100 | 7900 |
| | Shutdown temperature | °C | 134.9 | 133.6 | 134.7 | 134.7 | 136.6 |
| | Shrinkage ratio (TD) | % | 15 | 27 | 5 | 5 | 19 |
| | Meltdown temperature | °C | 159.6 | 160.4 | 161.9 | 161.9 | 157.5 |
| Coating process | Varnish | | a | a | d | - | a |
| | Humidifying condition (low humidity zone) | g/m$^3$ | 1.8 | 1.8 | 1.8 | - | 1.8 |
| | Humidifying condition (high humidity zone | g/m$^3$ | 12 | 12 | 12 | - | 12 |
| | Coating thickness | μm | 2 | 2 | 2 | - | 2 |
| Properties of battery separator | Average thickness | μm | 11 | 11 | 11 | 9 | 11 |
| | absT(1200) | | 0.020 | 0.021 | 0.015 | 0.000 | 0.021 |
| | absR(1200) | | 0.004 | 0.005 | 0.001 | 0.000 | 0.005 |
| | Shutdown temperature | °C | 135.2 | 135.0 | 135.5 | 134.7 | 142.3 |
| | Shutdown temperature difference[5] | °C | 0.3 | 1.4 | 0.8 | 0 | 5.7 |
| | Meltdown temperature | °C | >200 | >200 | >200 | >200 | >200 |
| | Heat resistance (shrinkage ratio) | % | 2.4 | 6.3 | 2.0 | 5 | 4.0 |
| | Electrode adhesion | | Good | Good | Good | Poor | Good |
| | Adhesion between modifying porous layer and microporous polyolefin | N/25mm | 1.5 | 1.5 | 1.2 | - | 1.5 |

EP 2 958 170 A1

(continued)

|  |  |  | Example 11 | Example 12 | Example 13 | Comparative Example 1 | Comparative Example 2 |
|---|---|---|---|---|---|---|---|
|  | Electrolvte permeability | % | Execellent | Execellent | Execellent | Poor | Execellent |

[Table 4]

| | | | Comparative Example 3 | Comparative Example 4 | Comparative Example 5 | Comparative Example 6 | Comparative Example 7 |
|---|---|---|---|---|---|---|---|
| Resin composition | UHMWPE | Mw[1] | $2.2 \times 10^6$ | $2.5 \times 10^6$ | $2.5 \times 10^6$ | $2.5 \times 10^6$ | $2.5 \times 10^6$ |
| | | mass % | 30 | 30 | 30 | 20 | 20 |
| | HDPE | Mw[1] | $3.0 \times 10^5$ | $2.8 \times 10^5$ | $2.8 \times 10^5$ | $3.0 \times 10^5$ | $3.0 \times 10^5$ |
| | | mass % | 40 | 70 | 70 | 80 | 80 |
| | Low molecular weight PE | Mw[1] | $2.0 \times 10^3$ | - | - | - | - |
| | | mass % | 30 | - | - | - | - |
| | ΔHm (≦125°C)[2] | % | 26 | 11 | 11 | 21 | 21 |
| | T(50%)[3] | °C | 133.6 | 134.7 | 134.7 | 132.2 | 132.2 |
| | PE solution concentration | mass % | 25 | 28 | 28 | 25 | 30 |
| | Blending condition Q[4]/Ns[4] | kg/h/rpm | 0.3 | 0.3 | 0.3 | 0.075 | 0.6 |
| | Stretching temperature | °C | 114 | 116 | 116 | 114 | 114 |
| | Stretching magnification (MD×TD) | | 5×5 | 5×5 | 5×5 | 5×5 | 5×5 |
| Membrane-forming condition | Deformation speed | %/sec | 20 | 20 | 20 | 20 | 20 |
| | Re-stretching temperature | | - | 127 | 127 | 127 | 127 |
| | Re-stretching direction | | - | TD | TD | TD | TD |
| | Re-stretching magnification | | - | 1.4 | 1.4 | 1.4 | 1.4 |
| | Heat-setting treatment temperature | °C | 118 | 127 | 127 | 120 | 120 |
| | Heat-setting treatment time | min | 10 | 10 | 10 | 10 | 10 |
| | Average thickness | μm | 9 | 9 | 9 | 21 | - |
| | Average pore size | μm | 0.08 | 0.13 | 0.13 | 0.08 | - |
| | Air resistance | sec/100ccAir | 490 | 70 | 70 | 498 | - |
| | Pin puncture strength | mN/20μm | 4196 | 2255 | 2255 | 3254 | - |

(continued)

| | | | Comparative Example 3 | Comparative Example 4 | Comparative Example 5 | Comparative Example 6 | Comparative Example 7 |
|---|---|---|---|---|---|---|---|
| Properties of polyolefin microporous membrane | Tensile breaking strength (MD) | kPa | 112900 | 118660 | 118660 | 80360 | - |
| | Tensile breaking strength (TD) | kPa | 95250 | 147100 | 147100 | 64680 | - |
| | Tensile breaking elongation (MD) | % | 190 | 130 | 130 | 70 | - |
| | Tensile breaking elongation (TD) | % | 270 | 105 | 105 | 110 | - |
| | Shutdown start temperature | °C | 122.8 | 124.5 | 124.5 | 121.5 | - |
| | Shutdown speed | sec/100cc/°C | 7800 | 14100 | 14100 | 9700 | - |
| | Shutdown temperature | °C | 134.2 | 134.7 | 134.7 | 132.8 | - |
| | Shrinkage ratio (TD) | % | 29 | 5 | 5 | 10 | - |
| | Meltdown temperature | °C | 148.4 | 161.9 | 161.9 | 144.4 | - |
| Coating process | Varnish | | a | a | e | a | - |
| | Humidifying condition (low humidity zone) | $g/m^3$ | 1.8 | 12 | 1.8 | 1.8 | |
| | Humidifying condition (high humidity zone | $g/m^3$ | 12 | 12 | 12 | 12 | - |
| | Coating thickness | $\mu m$ | 2 | 2 | 2 | 2 | - |
| Properties of battery separator | Average thickness | $\mu m$ | 11 | 11 | 11 | 23 | - |
| | absT(1200) | | 0.025 | 0.008 | 0.034 | 0.035 | |
| | absR(1200) | | 0.008 | 0.000 | 0.032 | 0.002 | |
| | Shutdown temperature | °C | 140.3 | 136 | 139.5 | 137.7 | - |
| | Shutdown temperature difference[5] | °C | 6.1 | 1.3 | 4.8 | 4.9 | - |
| | Meltdown temperature | °C | >200 | >200 | >200 | >200 | - |
| | Heat resistance (shrinkage ratio) | % | 5.8 | 1.4 | 1.4 | 1.9 | - |
| | Electrode adhesion | | Good | Good | Good | Good | - |

|  |  |  | Comparative Example 3 | Comparative Example 4 | Comparative Example 5 | Comparative Example 6 | Comparative Example 7 |
|---|---|---|---|---|---|---|---|
|  | Adhesion between modifying porous layer and microporous polyolefin | N/25mm | 1.5 | 0.6 | 2.2 | 2 | - |
|  | Electrolyte permeability | % | Execellent | Poor | Execellent | Execellent | - |

From Tables 1 and 2, it can be seen that the microporous polyolefin membranes of Examples 1 to 13 have a shutdown start temperature of not higher than 130°C, a shutdown speed of not lower than 10,000 sec/100 cc/°C, and a shutdown temperature of not higher than 135°C, indicating that they have shutdown properties and meltdown properties. They are also excellent in permeability and mechanical strength. It can be seen that the battery separators obtained by laminating a modifying porous layer to these microporous polyolefin membranes have a small difference between the shutdown temperature of a microporous polyolefin membrane and the shutdown temperature of a battery separator and extremely excellent heat resistance.

On the other hand, the battery separator of Comparative Example 1 has poor electrode adhesion because a modifying porous layer is not laminated. The microporous polyolefin membranes of Comparative Examples 2 and 3 have a low shutdown speed less than 8,000 sec/100 cc/°C, and the battery separators obtained by laminating a modifying porous layer to these microporous polyolefin membranes have a shutdown temperature significantly higher than those of the microporous polyolefin membranes.

The battery separator according to the present invention is a battery separator having excellent electrode adhesion and excellent shutdown properties, and can be suitably used particularly as a lithium ion secondary battery separator.

**Claims**

1. A battery separator, comprising:

   a microporous polyolefin membrane having a thickness of 16 $\mu$m or less; and
   a modifying porous layer comprising a fluorine resin and an inorganic particle or cross-linked polymer particle, the modifying porous layer being laminated on one side of the microporous polyolefin membrane, wherein the microporous polyolefin membrane has (a) a shutdown temperature (a temperature at which an air resistance measured while heating the microporous polyolefin membrane at a temperature rising rate of 5°C/min reaches $1 \times 10^5$ sec/100 cc) of 135°C or lower and (b) a rate of air resistance change (a gradient at an air resistance of $1 \times 10^4$ sec/100 cc of a curve representing the dependency of the air resistance on temperature) of $1 \times 10^4$ sec/100 cc/°C or more, and the battery separator satisfies Expression 1 and Expression 2:

$$0.01 \le \mathrm{absT}(1200) \le 0.30 \qquad \text{Expression 1}$$

   absT(1200): Absorbance of an absorption having a peak at or near 1,200 cm$^{-1}$ per 10 $\mu$m thickness of a microporous polyolefin membrane, as measured by infrared spectroscopy (transmission method) after peeling a modifying porous layer off the microporous polyolefin membrane; and

$$0.001 \le \mathrm{absR}(1200) \le 0.030 \quad \text{Expression 2}$$

   absR(1200): Absorbance of a maximum peak at or near 1,200 cm$^{-1}$, as measured by infrared spectroscopy (reflection method) on the surface of a microporous polyolefin membrane that is opposite to a modifying porous layer.

2. The battery separator according to claim 1, wherein the microporous polyolefin membrane has a transverse shrinkage rate at 130°C (measured by thermomechanical analysis under a load of 2 gf at a temperature rising rate of 5°C/min) of 20% or less.

3. The battery separator according to claim 1 or 2, wherein the peeling strength between the microporous polyolefin membrane and the modifying porous layer is at least 1.0 N/25 mm.

4. The battery separator according to any one of claims 1 to 3, wherein the microporous polyolefin membrane comprises polyethylene.

5. The battery separator according to any one of claims 1 to 4, wherein the contained amount of the inorganic particle or cross-linked polymer particle is 80% by weight to 97% by weight based on the amount of the modifying porous layer.

**6.** The battery separator according to any one of claims 1 to 5, wherein the inorganic particle is at least one selected from silica, titanium dioxide, and alumina.

**7.** The battery separator according to any one of claims 1 to 5, wherein the cross-linked polymer particle is at least one selected from cross-linked polystyrene particle, cross-linked acrylic resin particle, and cross-linked methyl methacrylate particle.

**8.** A process for producing the battery separator according to any one of claims 1 to 7, comprising the following steps:

(1) preparing a polyolefin resin solution by melt-blending a polyolefin resin comprising a polyethylene resin with a membrane-forming solvent in a twin-screw extruder such that Q/Ns, the ratio of a feed rate Q (kg/h) of the polyolefin resin to a screw speed Ns (rpm), is 0.1 to 0.55 Kg/h/rpm, the polyethylene resin having a total endotherm at 125°C that is not more than 20% of a heat of crystal melting measured by differential scanning calorimetry at a temperature rising rate of 10°C/min, and a temperature of 135°C or lower at the time when the endotherm reaches 50% of the heat of crystal melting;
(2) forming a gel-like sheet by extruding the polyolefin resin solution through a die and cooling the extrudate;
(3) stretching the gel-like sheet at a rate of 1 to 80%/sec relative to 100% of the length before stretching;
(4) removing the membrane-forming solvent from the stretched gel-like sheet;
(5) drying the gel-like sheet from which the membrane-forming solvent has been removed to prepare a microporous polyolefin membrane;
(6) applying a varnish to the microporous polyolefin membrane, the varnish comprising a fluorine resin and an inorganic particle or cross-linked polymer particle, wherein the fluorine resin concentration in solution components excluding the inorganic particle or cross-linked polymer particle is 0.5% by weight to 2.5% by weight;
(7) passing the microporous polyolefin membrane coated with the varnish through a low humidity zone having an absolute humidity of less than 6 $g/m^3$;
(8) passing the microporous polyolefin membrane passed through the low humidity zone through a high humidity zone having an absolute humidity of 6 $g/m^3$ or more; and
(9) immersing the microporous polyolefin membrane passed through the high humidity zone in a coagulation bath to convert the coating layer comprising the fluorine resin into a modifying porous layer, followed by washing and drying, to obtain a battery separator.

[Figure 1]

[Figure 2]

[Figure 3]

[Figure 4]

[Figure 5]

## INTERNATIONAL SEARCH REPORT

| International application No. |
| --- |
| PCT/JP2014/053125 |

A. CLASSIFICATION OF SUBJECT MATTER
*H01M2/16*(2006.01)i, *B32B5/32*(2006.01)i, *B32B27/30*(2006.01)i, *B32B27/32* (2006.01)i

According to International Patent Classification (IPC) or to both national classification and IPC

B. FIELDS SEARCHED

Minimum documentation searched (classification system followed by classification symbols)
H01M2/16, B32B5/32, B32B27/30, B32B27/32

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2012-61791 A (Toray Industries, Inc.), 29 March 2012 (29.03.2012), entire text (Family: none) | 1-8 |
| A | JP 2012-43762 A (Toray Industries, Inc.), 01 March 2012 (01.03.2012), entire text (Family: none) | 1-8 |
| A | WO 2011/161837 A1 (Toray Industries, Inc.), 29 December 2011 (29.12.2011), entire text & US 2013/0101889 A1   & EP 2586611 A1 & CN 102958694 A | 1-8 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 March, 2014 (18.03.14) | 01 April, 2014 (01.04.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2014/053125 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2007/060991 A1  (Tonen Chemical Corp.), 31 May 2007 (31.05.2007), entire text & JP 5250263 B            & US 2009/0042008 A1 & EP 1956040 A1            & CN 101313016 A & KR 10-2008-0077972 A | 1-8 |
| P,A | WO 2013/153954 A1  (Toray Battery Separator Film Co., Ltd.), 17 October 2013 (17.10.2013), entire text (Family: none) | 1-8 |
| P,A | JP 5387871 B1  (Toray Battery Separator Film Co., Ltd.), 15 January 2014 (15.01.2014), entire text (Family: none) | 1-8 |
| P,A | JP 5296917 B1  (Toray Battery Separator Film Co., Ltd.), 25 September 2013 (25.09.2013), entire text (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006027024 A
- JP 2011138761 A
- JP 4988973 B
- JP 2003171495 A
- JP 2012043762 A
- WO 200760991 A
- JP 3347854 B
- JP 2006248582 A
- WO 200020493 A
- JP 2002256099 A
- WO 2005054350 A